# EUROPEAN PATENT SPECIFICATION

(11) **EP 2 504 230 B1**
(45) Date of publication and mention of the grant of the patent: **11.10.2017**
(21) Application number: 10791001.0
(22) Date of filing: 23.11.2010
(51) Int. Cl.: B64C 27/35, F16F 1/40

(54) **A ROTARY WING AIRCRAFT BEARING FOR ROTARY WING AIRCRAFT MOTIONS**
HUBSCHRAUBERLAGER ZUR ERMÖGLICHUNG VON HUBSCHRAUBERBEWEGUNGEN
PALIER D'AÉRONEF À AILES ROTATIVES POUR MOUVEMENTS D'AÉRONEF À AILES ROTATIVES

(30) Priority: 23.11.2009 US 263799 P
(43) Date of publication of application: 03.10.2012
(73) Proprietor: LORD Corporation, Cary, NC 27511 (US)
(72) Inventor: HALLADAY, James, R., Erie, PA 16505 (US); SHERIDAN, Patrick, M., 1207, Geneva (CH); DOWNING, Marshall, W., Erie, PA 16415 (US); FUHRER, Zachary, Erie, PA 16502 (US)
(74) Representative: Wynne-Jones, Lainé and James LLP
(86) International application number: PCT/US2010/003024
(87) International publication number: WO 2011/062639

(56) References cited:
- WO-A1-79/00033
- US-A1- 2004 208 745
- US-A1- 2008 023 586

## Description

### Background

US 2008/0023586 A1 provides for a tiltrotor aircraft drivelink that includes a nonelastomeric outer drivelink member with a first linkend and a distal second linkend. The tiltrotor aircraft drivelink first linkend has a first linkend cavity with a first linkend cavity inner circumferential bonding surface, and a first linkend nonelastomeric inner member contained in the first linkend cavity, the first linkend nonelastomeric inner member having a first linkend outer circumferential bonding surface, and a first linkend elastomeric intermediate having an outer circumferential elastomeric bonding surface and an inner circumferential elastomeric bonding surface, the outer circumferential elastomeric bonding surface bonded to the first linkend cavity inner circumferential bonding surface and the inner circumferential elastomeric bonding surface bonded to the first linkend outer circumferential bonding surface, the elastomeric intermediate containing N nonelastomeric outboard bonded shims and no more than N-1 nonelastomeric inboard bonded shims. The tiltrotor aircraft drivelink second linkend has a second linkend cavity with a second linkend cavity inner circumferential bonding surface, and a second linkend nonelastomeric inner member contained in the second linkend cavity, the second linkend nonelastomeric inner member having a second linkend outer circumferential bonding surface, and a second linkend elastomeric intermediate having an outer circumferential elastomeric bonding surface and an inner circumferential elastomeric bonding surface, the outer circumferential elastomeric bonding surface bonded to the second linkend cavity inner circumferential bonding surface and the inner circumferential elastomeric bonding surface bonded to the second linkend outer circumferential bonding surface, the second elastomeric intermediate containing N nonelastomeric outboard bonded shims and no more than N-1 nonelastomeric inboard bonded shims.

US 2004/0208745 A1 provides for a snubber inner member having a doubly convex outer surface portion having a central longitudinal axis. Also provided is a shim/spacer stack secured to the outer surface portion couples the snubber inner member to the second member. Additionally, a retainer having one or more engagement surfaces cooperates with one or more engagement surfaces of the snubber inner member to constrain lateral movement of the snubber inner member relative to the retainer while permitting longitudinal movement of the snubber inner member away from the retainer. An elastomer secures the retainer to the first member.

WO 79/00033 A1 provides for a flexible coupling that includes outer member and inner member drivingly connected in a rotational sense through opposed pairs of flats separated by laminated elastomer-inelastic material bonded to the flats. Four inner flats are squarely arranged and are cylindrincally curved along their lengths about orthogonal axes of curvature intersecting at the axis of rotation of the inner member, and are flat across their widths. Four opposed outer flats, parallel to the inner flats, are flat across their lengths and widths and extend alongside the axis of rotation of the outer member. Inner layers of laminated material extend parallel to the inner flats and the outer layers of laminated material, bonded to the inner layers, extend parallel to the outer flats.

### Field of the Invention

The invention relates to the field of rotary wing aircraft such as helicopters. The invention relates to the field of rotary wing aircraft bearings for connecting rotary wing vehicle members and providing relative motion between the connecting rotary wing vehicle members. More particularly the invention relates to the field of elastomeric high capacity laminated bearings for rotary wing aircraft.

### Summary of the Invention

According to a first aspect of the invention, there is provided a rotary wing aircraft bearing as claimed in claim 1. Thus, in an embodiment the invention includes a rotary wing aircraft bearing to provide a constrained relative motion between a first rotary wing aircraft member and a second rotary wing aircraft member. The bearing includes an elastomeric mold bonded laminated bearing stack, the elastomeric mold bonded laminated bearing stack including a plurality of mold bonded alternating layers of nonelastomeric shim member layers and elastomeric shim members layers, the alternating layers having an exterior surface and an interior center distal from the exterior surface. At least one of the elastomeric shim members layers comprises an interior elastomer region distal from the exterior surface, the interior elastomer region comprising an interior cured elastomer composition having at least a first interior optical characteristic ingredient, and an exterior elastomer region encompassing the interior elastomer region, the exterior elastomer region proximate the exterior surface, the exterior elastomer region comprising an exterior cured elastomer composition having at least a second exterior optical characteristic ingredient, the at least a second exterior optical characteristic ingredient different than the interior cured elastomer composition first interior optical characteristic ingredient, with an elastomer void crack propagating from the exterior surface inward towards the interior elastomer region. The bearing is configured such that a repeated rotary wing aircraft relative motion between the first rotary wing aircraft member and the second rotary wing aircraft member generates a plurality of interior cured elastomer composition crumbs to be expelled from the elastomer void towards the exterior elastomer region, the interior cured elastomer composition crumbs optically distinguishable from the exterior cured elastomer composition.

According to a second aspect of the invention there is provided a method of making a rotary wing aircraft bearing as claimed in claim 14. Thus, in an embodiment the invention includes a method of making a rotary wing aircraft bearing to provide a constrained relative motion between a first rotary wing aircraft member and a second rotary wing aircraft member. The method includes providing a plurality of nonelastomeric shim members. The method includes providing a plurality of elastomeric shim member layers. The method includes providing at least one of the elastomeric shim member layers with an interior elastomer region, the interior elastomer region comprising an interior elastomer composition having at least a first interior optical characteristic, and an exterior elastomer region, the exterior elastomer region comprising an exterior elastomer composition having at least a second exterior optical characteristic, the at least a second exterior optical characteristic different than the interior elastomer composition first interior optical characteristic, with the exterior elastomer region disposed out from the interior elastomer region. The method includes bonding the nonelastomeric shim members and the elastomeric shim member layers together to provide an alternating laminated bearing stack with the exterior elastomer region exterior of the interior elastomer region, the exterior elastomer region proximate an exterior surface of the alternating laminated bearing stack, the exterior elastomer region comprising an exterior cured elastomer composition, the at least second exterior optical characteristic different than the interior cured elastomer composition first interior optical characteristic, wherein with an elastomer void crack propagating from the exterior surface inward towards the interior elastomer region and a repeated rotary wing aircraft relative motion between the first rotary wing aircraft member and the second rotary wing aircraft member generates a plurality of interior cured elastomer composition crumbs to be expelled from the elastomer void towards the exterior elastomer region, the interior cured elastomer composition crumbs optically distinguishable from the exterior cured elastomer composition.

In an example, the invention includes a rotary wing aircraft bearing to provide a rotary wing motion between a first rotary wing aircraft member and a second rotary wing aircraft member. The bearing including an elastomeric bonded laminated bearing stack, the elastomeric bonded laminated bearing stack including a plurality of bonded alternating layers of nonelastomeric shim member layers and elastomeric shim members layers. The bearing including a predetermined first elastomeric shim member layer comprised of a first elastomer region, the first elastomer region comprised of a first cured elastomer composition having at least a first optical characteristic. The predetermined first elastomeric shim member layer comprised of a second elastomer region, the second elastomer region proximate an exterior surface, the second elastomer region comprised of a second cured elastomer composition having at least a second optical characteristic, the at least second optical characteristic different than the first cured elastomer composition first optical characteristic, wherein a rotary wing motion elastomer void crack propogating from the exterior surface inward towards an interior of the bearing interior elastomer region with the rotary wing motion generates a plurality of first cured elastomer composition crumbs expelled from the elastomer void, the first cured elastomer composition crumbs optically distinguishable from the second cured elastomer composition.

In an example, the invention includes a bearing to provide a constrained relative motion between a first member and a second member. The bearing includes an elastomeric mold bonded bearing stack, the elastomeric mold bonded bearing stack including at least a first mold bonded elastomeric shim layer, the at least first mold bonded elastomeric shim layer having an exterior surface and an interior center distal from the exterior surface. The elastomeric shim layer is comprised of an enclosed interior elastomer region distal from the exterior surface, the interior elastomer region comprised of an interior cured elastomer composition having at least a first interior optical characteristic ingredient. The elastomeric shim layer is comprised of an exterior elastomer region encompassing the interior elastomer region, the exterior elastomer region proximate the exterior surface, the exterior elastomer region comprised of an exterior cured elastomer composition having at least a second exterior optical characteristic ingredient, the at least second exterior optical characteristic ingredient different than the interior cured elastomer composition first interior optical characteristic ingredient, wherein an elastomer void crack propogating from the exterior surface inward towards the interior elastomer region and a repeated relative motion between the first member and the second member generates a plurality of interior cured elastomer composition crumbs to be expelled from the elastomer void, the interior cured elastomer composition crumbs optically distinguishable from the exterior cured elastomer composition.

Preferably the interior cured elastomer composition crumbs come from the interior cured elastomer composition, preferably the solid interior cured elastomer is broken up into crumbs with the repeated relative motion proximate an interior portion of the propogating crack and expelled outward towards the exterior, with the interior cured elastomer composition crumbs optically distinguishable from exterior cured elastomer composition crumbs and the exterior cured elastomer surface. Preferably the bearing is installed in a bearing location for bearing a compressive load between the first member and the second member in a first direction and the repeated relative motion comprises an alternating shear load in a first and second shearing direction with the compressive load first direction nonparallel to the first and second shearing direction. Preferably when installed the interior elastomer crumbs are visible by an observing inspector. Preferably the expelled interior cured elastomer composition crumbs are persistent with the crumbs preferably collecting and sticking to the exterior surface, and preferably persistent to an exposed fluid stream, preferably with the expelled interior cured elastomer composition crumbs sticking the exterior surface when the bearing is moving through air or exposed to a water stream/current. Preferably the at least one elastomeric shim layer is visible by an observing inspector when installed in a bearing location for bearing a compressive load between the first member and the second member in a first direction and the repeated relative motion comprises an alternating shear load in a first and second shearing direction with the compressive load first direction nonparallel to the first and second shearing direction. Preferably the at least one elastomeric shim layer has an elastomer layer thickness t and an exterior surface bulge area BA, with the elastomeric shim layer having a bonded elastomer interface load area LA, with the elastomeric shim layer having a shape factor SF with .1<SF<60.

Preferably the at least one elastomeric shim layer with the interior elastomer region interior cured elastomer composition and the exterior elastomer region exterior cured elastomer composition are disposed at a predetermine degradation position within the bearing stack and the exterior elastomer region extends inward towards the interior elastomer region with a predetermined exterior elastomer region radial dimension. Preferably the bearing is a rotary wing aircraft bearing for a rotary wing aircraft.

In an example, the invention includes a method of making a bearing to provide a constrained relative motion between a first member and a second member. The method includes providing at least a first nonelastomeric member surface and at least a second nonelastomeric member surface. The method includes providing at least a first elastomeric shim layer between the first nonelastomeric member surface and the at least second nonelastomeric member surface in a mold, and bonding the first elastomeric shim layer to the first nonelastomeric member surface and the second nonelastomeric member surface in the mold to provide an elastomeric mold bonded bearing stack, with first mold bonded elastomeric shim layer having an exterior surface and an interior center distal from the exterior surface, the elastomeric shim layer comprised of an enclosed interior bonded elastomer region distal from the exterior surface, the interior elastomer region comprised of an interior cured elastomer composition having at least a first interior optical characteristic ingredient, and the elastomeric shim layer comprised of an exterior bonded elastomer region encompassing the interior bonded elastomer region, the exterior elastomer region proximate the exterior surface, the exterior elastomer region comprised of an exterior cured elastomer composition having at least a second exterior optical characteristic ingredient, the at least second exterior optical characteristic ingredient different than the interior cured elastomer composition first interior optical characteristic ingredient, wherein an elastomer void crack propogating from the exterior surface inward towards the interior elastomer region and a repeated relative motion between the first member and the second member generates a plurality of interior cured elastomer composition crumbs to be expelled from the elastomer void, the interior cured elastomer composition crumbs optically distinguishable from the exterior cured elastomer composition.

Preferably the interior cured elastomer composition crumbs come from the interior cured elastomer composition, preferably with the solid interior cured elastomer broken up into crumbs with the repeated relative motion proximate an interior portion of the propogating crack and expelled outward towards the exterior, with the interior cured elastomer composition crumbs optically distinguishable from exterior cured elastomer composition crumbs and the exterior surface. Preferably the bearing is installed in a bearing location for bearing a compressive load between the first member and the second member in a first direction and the repeated relative motion comprises an alternating shear load in a first and second shearing direction with the compressive load first direction nonparallel to the first and second shearing direction. Preferably the expelled interior cured elastomer composition crumbs are persistent in that they preferably collect and stick to the exterior surface, and preferably persistent to an exposed fluid stream, preferably with the expelled interior cured elastomer composition crumbs sticking to the exterior surface when the bearing is moving through air or exposed to a water stream/current. Preferably the at least one elastomeric shim layer is visible by an observing inspector when installed in a bearing location for bearing a compressive load between the first member and the second member in a first direction and the repeated relative motion comprises an alternating shear load in a first and second shearing direction with the compressive load first direction nonparallel to the first and second shearing direction. Preferably the at least one elastomeric shim layer has an elastomer layer thickness t and an exterior surface bulge area BA, with the elastomeric shim layer having a bonded elastomer interface load area LA , with the elastomeric shim layer having a shape factor SF with .1<SF<60. Preferably the at least one elastomeric shim layer with the interior elastomer region interior cured elastomer composition and the exterior elastomer region exterior cured elastomer composition are disposed at a predetermine degradation position within the bearing stack and the exterior elastomer region extends inward towards the interior elastomer region with a predetermined exterior elastomer region radial dimension. Preferably the bearing is a rotary wing aircraft bearing for a rotary wing aircraft, with the bearing installed in a rotary wing system of a rotary wing aircraft.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principals and operation of the invention.

### Detailed Description of the Preferred Embodiment

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

Reference will now be made in detail to the present preferred embodiments of the invention, examples of which are illustrated in the accompanying figures.

In an embodiment the invention according to claim 1, includes a rotary wing aircraft bearing to provide a constrained relative motion between a first rotary wing aircraft member and a second rotary wing aircraft member. The bearing including an elastomeric mold bonded laminated subassembly bearing stack, the elastomeric mold bonded laminated subassembly bearing stack including a plurality of mold bonded alternating layers of nonelastomeric shim member layers and elastomeric shim members layers, the alternating layers having an exterior surface and an interior center distal from the exterior surface. At least one of the elastomeric shim member layers comprised of an interior elastomer region distal from the exterior surface, the interior elastomer region comprised of an interior cured elastomer composition having at least a first interior
optical characteristic ingredient, and an exterior elastomer region encompassing the interior elastomer region, the exterior elastomer region proximate the exterior surface, the exterior elastomer region comprised of an exterior cured elastomer composition having at least a second exterior optical characteristic ingredient, the at least second exterior optical characteristic ingredient different than the interior cured elastomer composition first interior optical characteristic ingredient, wherein with an elastomer void crack propogating from the exterior surface inward towards the interior elastomer region and a repeated rotary wing aircraft relative motion between the first rotary wing aircraft member and the second rotary wing aircraft member generates a plurality of interior cured elastomer composition crumbs to be expelled from the elastomer void, the interior cured elastomer composition crumbs optically distinguishable from the exterior cured elastomer composition. In an embodiment a plurality of the elastomeric shim member layers include an interior elastomer region with the interior first optical characteristic and all of the elastomeric shim member layers exterior elastomer regions are optically distinguishable from the interior elastomer regions. In an embodiment only predetermined elastomeric shim member layers include the at least first interior and second exterior optically distinguishable characteristics. In embodiments the rotary wing aircraft bearing first interior optical characteristic ingredient is comprised of a dye, preferably an activated dye. Preferably the dye is not soluble in the interior cured elastomer. Preferably the dye is water soluble, preferably with the water soluble dye activated by an inspection fluid. Preferably the dye is fluorescent. Preferably the nonelastomer-soluble dye is a water soluble dye that is fluorescent wherein an inspection fluid applied to the bearing discloses the first interior elastomer composition. In an embodiment the first interior optical characteristic ingredient is comprised of a carbon black substitute. In an embodiment the carbon black substitute is comprised of silica. Preferably the carbon black substitute composition includes a nonblack colorant. In an embodiment the first interior optical characteristic ingredient is comprised of carbon black and the second exterior composition is comprised of a carbon black substitute. In an embodiment the second exterior optical characteristic is comprised of carbon black. In an embodiment the exterior elastomer region extends inward towards the bearing layer's center normal axis towards the interior elastomer region with a predetermined exterior elastomer region radial dimension. Preferably the exterior elastomer region extends inward at least 10% of the total layer radial dimension, preferably at least 13% of the total layer radial dimension, preferably at least 16% of the total layer radial dimension, preferably at least 19% of the total layer radial dimension, preferably at least 21% of the total layer radial dimension, preferably at least 25% of the total layer radial dimension. Preferably the interior elastomer region extends outward towards bearing exterior surface and the exterior elastomer region with a predetermined interior elastomer region radial dimension. Preferably the interior elastomer region is centered about a bearing center axis, with the interior elastomer region extending outward from the bearing center axis towards bearing exterior surface with a predetermined interior elastomer region dimension. Preferably the center axis is substantially through the center of the alternating layers, preferably substantially normal to the alternating layers. Preferably the at least one elastomeric shim member layer with the interior elastomer region interior cured elastomer composition and the exterior elastomer region exterior cured elastomer composition are disposed at a predetermined initial early degradation position within the laminated bearing stack. Preferably the at least one elastomeric shim member layer at the predetermined initial early degradation position within the laminated bearing stack is visible by an observing inspector when installed in the rotary wing aircraft. Preferably the at least one elastomeric shim member layer with the interior elastomer region interior cured elastomer composition and the exterior elastomer region exterior cured elastomer composition are disposed at a predetermine degradation position within the laminated bearing stack includes a third elastomer region cured elastomer composition having a third optical characteristic different from the interior elastomer region interior cured elastomer composition and the exterior elastomer region exterior cured elastomer composition.

In an embodiment the invention includes a method of making a rotary wing aircraft bearing to provide a constrained relative motion between a first rotary wing aircraft member and a second rotary wing aircraft member. The method includes providing a plurality of nonelastomeric shim members. The method includes providing a plurality of elastomeric shim member layers, at least one predetermined elastomeric shim member layer has an interior elastomer region, the interior elastomer region comprised of an interior elastomer composition having at least a first interior optical characteristic with a first interior optical characteristic ingredient. The at least one predetermined elastomeric shim member layer having an exterior elastomer region, the exterior elastomer region comprised of an exterior elastomer composition having at least a second exterior optical characteristic with a second interior optical characteristic ingredient, the at least second exterior optical characteristic ingredient different than the interior elastomer composition first interior optical characteristic ingredient, the exterior elastomer region disposed out from the interior elastomer region and encompassing the interior elastomer. The method includes mold curing elastomer bonding the nonelastomeric shim members and the elastomeric shim member layers together to provide an alternating laminated bearing stack with the exterior elastomer region exterior of the interior elastomer region, the exterior elastomer region proximate an exterior surface of the alternating laminated bearing stack. The bonded exterior elastomer region comprised of an exterior cured elastomer composition, the at least second exterior optical characteristic different than the interior cured elastomer composition first interior optical characteristic, wherein an elastomer void crack propagating from the exterior surface inward towards the interior elastomer region with a repeated rotary wing aircraft relative motion between the first rotary wing aircraft member and the second rotary wing aircraft member generates a plurality of interior cured elastomer composition crumbs to be expelled from the elastomer void, the interior cured elastomer composition crumbs optically distinguishable from the exterior cured elastomer composition. Preferably the method includes installing the rotary wing aircraft bearing in a rotary wing aircraft with an observable portion of the exterior elastomer region visible to an inspector wherein the optically distinguishable interior cured elastomer composition crumbs are visually detected by the inspector. Preferably with the method a plurality of the elastomeric shim member layers include an interior elastomer region. Preferably with the method a plurality of the elastomeric shim member layers include an interior elastomer region and all of the elastomeric shim member layers exterior elastomer regions are optically distinguishable from these interior elastomer regions. In an embodiment the first interior optical characteristic ingredient is comprised of a dye, preferably an activated dye. Preferably the dye is not soluble in the interior elastomer, preferably with the dye water soluble. Preferably the dye is fluorescent, preferably with the water activated dye fluorescent when an inspecting water inspection fluid is applied to the bearing. In an embodiment the first interior optical characteristic ingredient is comprised of a carbon black substitute, preferably with the carbon black substitute comprised of silica. Preferably with the carbon black substitute the elastomer composition ingredients include a nonblack colorant. In an embodiment the first interior optical characteristic ingredient is comprised of carbon black. In an embodiment the second exterior optical characteristic ingredient is comprised of carbon black. In an embodiment the second exterior optical characteristic ingredient is comprised of a carbon black substitute. Preferably the exterior elastomer region extends inward towards bearing layer normal center axis and towards the interior elastomer region with a predetermined exterior elastomer region radial dimension, preferably the exterior elastomer region extends inward at least 10% of the total layer radial dimension, preferably at least 13% of the total layer radial dimension, preferably at least 16% of the total layer radial dimension, preferably at least 19% of the total layer radial dimension, preferably at least 21% of the total layer radial dimension, preferably at least 25% of the total layer radial dimension. Preferably the interior elastomer region extends outward towards the bearing exterior surface and towards the exterior elastomer region with a predetermined interior elastomer region radial dimension. Preferably the interior elastomer region is centered about a bearing center axis, with the interior elastomer region extending outward from the bearing center axis and towards the bearing exterior surface with a predetermined interior elastomer region dimension, preferably with the center axis substantially through the center of the alternating layers and substantially normal to the alternating layers. Preferably the at least one elastomeric shim member layer with the interior elastomer region interior cured elastomer composition and the exterior elastomer region exterior cured elastomer composition are disposed at a predetermine initial early degradation position within the laminated bearing stack, preferably with the at least one elastomeric shim member layer at the predetermine degradation position within the laminated bearing stack visible by an observing inspector when installed in a rotary wing aircraft. In an embodiment the at least one elastomeric shim member layer includes a third elastomer region cured elastomer composition having a third optical characteristic different from the interior elastomer region interior cured elastomer composition and the exterior elastomer region exterior cured elastomer composition. Preferably the nonelastomeric shim members and the elastomeric shim member layers are bonded together in a mold with the elastomeric shim member layers cured inside the mold. Preferably the mold includes an elastomer transfer sprue for transferring additional elastomer into the mold. In a first preferred embodiment the elastomer transfer sprue is proximate the interior elastomer region and the additional elastomer appears optically similar to the interior elastomer composition. In a second preferred embodiment the elastomer transfer sprue is proximate the exterior elastomer region and the additional elastomer appears optically similar to the exterior elastomer composition.

In an embodiment the invention includes a rotary wing aircraft bearing to provide a constrained relative rotary wing motion between a first rotary wing aircraft member and a second rotary wing aircraft member. The bearing includes an elastomeric bonded laminated bearing stack, the elastomeric bonded laminated bearing stack including a plurality of bonded alternating layers of nonelastomeric shim member layers and elastomeric shim members layers, with a predetermined first elastomeric shim members layer comprised of a first elastomer region, the first elastomer region comprised of an first cured elastomer composition having at least a first optical characteristic, and a second elastomer region, the second elastomer region proximate an exterior surface, the second elastomer region comprised of a second cured elastomer composition having at least a second optical characteristic, the at least second optical characteristic elastomer having an at least second optical characteristic ingredient different than the first cured elastomer composition first optical characteristic ingredient, wherein a rotary wing motion elastomer void crack propagating from the exterior surface inward towards an interior of the bearing interior elastomer region with the rotary wing motion generates a plurality of first cured elastomer composition crumbs expelled from the elastomer void, the first cured elastomer composition crumbs optically distinguishable from the second cured elastomer composition. Preferably the predetermined first elastomeric shim layer has a predetermined stack position within elastomeric bonded laminated bearing stack, preferably determined from historical testing and design. The at least two different optically visually distinguishable rubber elastomers are embedded and bonded within the at least one predetermined individual layers of the High Capacity Laminated elastomeric bearing, with the bonded elastomer shim member with layer the at least two different optically visually distinguishable rubber elastomers preferably thin, preferably with a thickness less than 5.08 mm (0.200 inches), preferably less than 3.81 mm (.150 inches). As the HCL bearings fail a crack progress inward from the surface into the thin rubber layers, and as the crack progresses, crumbs of the cracked rubber are carried to the surface of the part where they can be visually observed, and with the at least second different optically visually distinguishable rubber elastomer embedded inside the layer as visually contrasting rubber regions at predetermined internal depths, the crack depth in the HCL bearing can be monitored by observing the optical difference of the crumbs of expelled elastomer at the surface.
In preferred embodiments the elastomer compositions are based on diene rubber, preferrably natural rubber, polyisoprene, polybutadiene, styrene butadiene and blends thereof. The elastomers are formulated to be nonoptically similar and compatible so they can be cured together as one shim layer, but visually distinct, either under human visible light or other electromagnetic spectrum wavelengths such as under ultraviolet light. For example, one elastomer may be reinforced with carbon black and another by precipitated or fumed silica as a carbon black substitute. When using silica as a carbon black substitute, it is preferred to include a silane coupling agent to increase the interaction between the silica and the polymer. The silica-reinforced elastomer composition is preferrably colored by adding either organic or inorganic pigments or dyes. In embodiments the elastomer compositions are provided with optically different characteristics with optical characteristic ingredients such as made white through the addition of titanium dioxide, rust brown red with red iron oxide, green with chromium oxide or with green phthalocyanine. In embodiments, pigments or dyes including fluorescent pigment dyes are used. Preferably rubber pigments and dyes are used to create visually distinct rubber compositions. In an embodiment the visually distinguishable optical characteristic ingredient is a water soluble form of fluorescein (called sodium fluorescein or uranine yellow). Sodium fluorescein is not soluble in elastomer rubber but it is readily soluble in water and produces an intense yellow-green color when rubber containing sodium fluorescein comes in contact with water. The inclusion of sodium fluorescein in the interior elastomer region gives a strong visual evidence of crack depth when the rubber crumbs or the crack itself is exposed to water and turns the water yellow. Expelled interior crumbs are preferably inspected for by water activation by exposing the expelled elastomer crumbs to water, such as with water flushing, water spray, or wiping with a wet material. In a preferred embodiment the inclusion of sodium fluorescein in the interior elastomer region is in a bearing with a elastomeric shim layer with the bearing installed in a water environment bearing location.

Below are examples of optically visually distinguishable rubber elastomers with different visually distinguishable optical characteristic ingredients:

| Optical Character color | Black | Red | White | Yellow | Green | Black with |
|---|---|---|---|---|---|---|
| Ingredient | | | | | | Yellow Indicator |
| Natural rubber | 60.0 | 60.0 | 60.0 | 60.0 | 60.0 | 60.0 |
| Polybutadiene rubber | 30.0 | 30.0 | 30.0 | 30.0 | 30.0 | 30.0 |
| Styrene butadiene rubber | 10.0 | 10.0 | 10.0 | 10.0 | 10.0 | 10.0 |
| Aromatic oil | 5.0 | 5.0 | 5.0 | 5.0 | 5.0 | 5.0 |
| Stearic acid | 2.0 | 2.0 | 2.0 | 2.0 | 2.0 | 2.0 |
| Zinc oxide | 5.0 | 5.0 | 5.0 | 5.0 | 5.0 | 5.0 |
| Sulfur | 1.8 | 1.8 | 1.8 | 1.8 | 1.8 | 1.8 |
| CBTS (accelerator) | 1.2 | 1.2 | 1.2 | 1.2 | 1.2 | 1.2 |
| Si-69 Silane | --- | 5.0 | 5.0 | 5.0 | 5.0 | - |
| N330 carbon black | 45.0 | --- | --- | --- | --- | 45.0 |
| Hi-Sil 233 silica | --- | 40.0 | 40.0 | 40.0 | 40.0 | --- |
| Titanium dioxide | --- | 8.0 | 5.0 | 2.0 | 5.0 | --- |
| Red iron oxide | --- | --- | 1.0 | --- | --- | --- |
| Chromium Green oxide | --- | --- | --- | --- | 2.0 | --- |
| Yellow 2555 pigment | --- | --- | --- | 2.5 | --- | --- |
| Sodium fluorescein | --- | --- | --- | --- | --- | 5.0 |

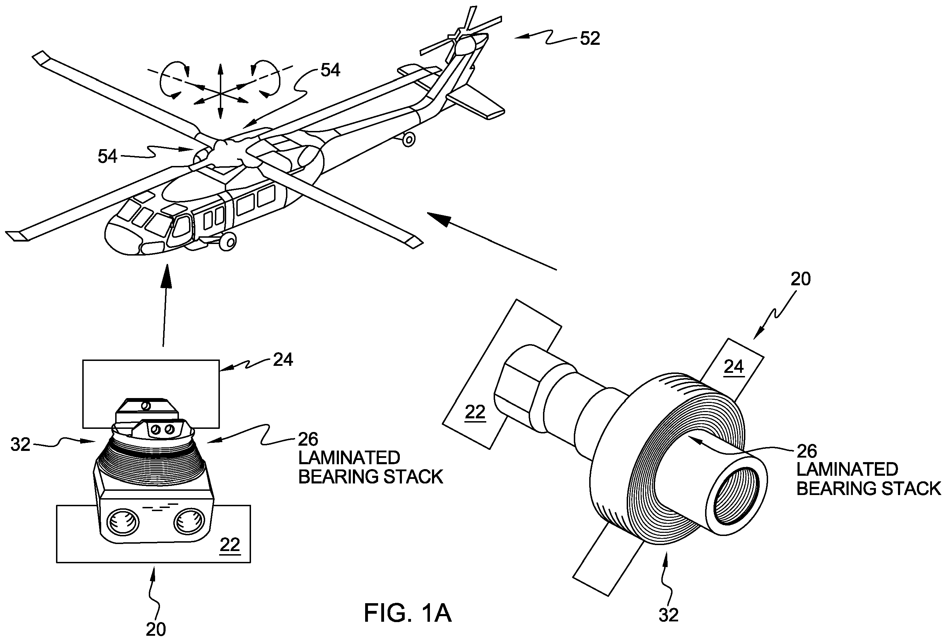

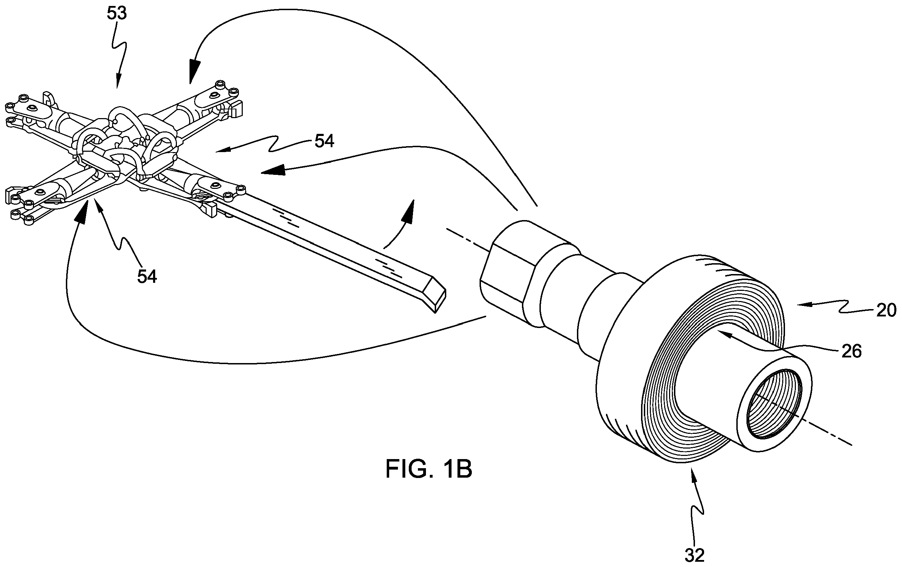

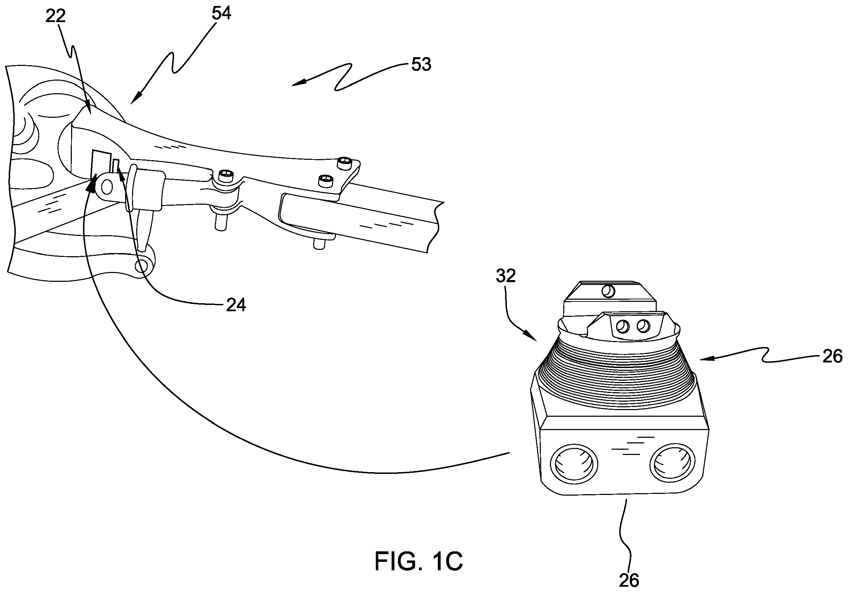

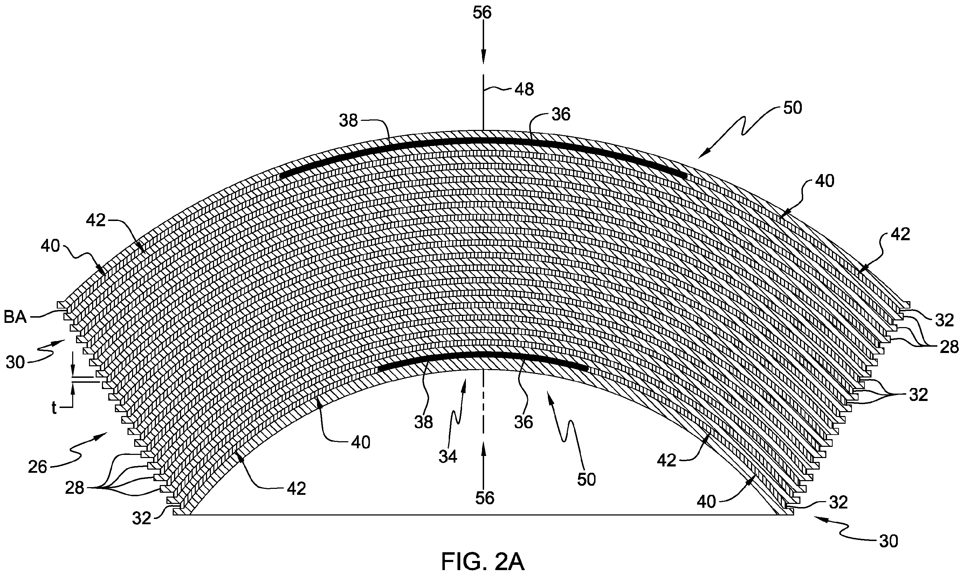

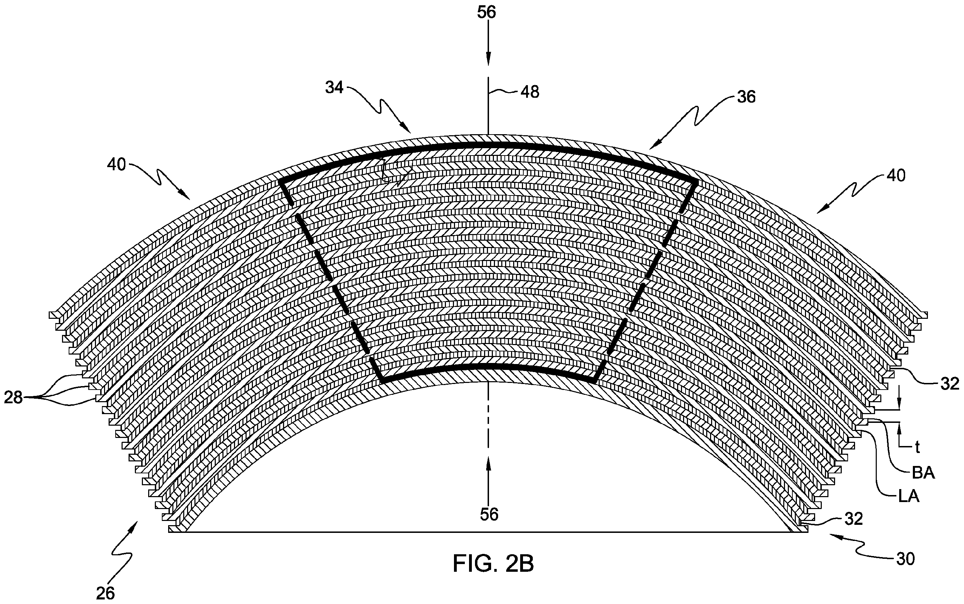

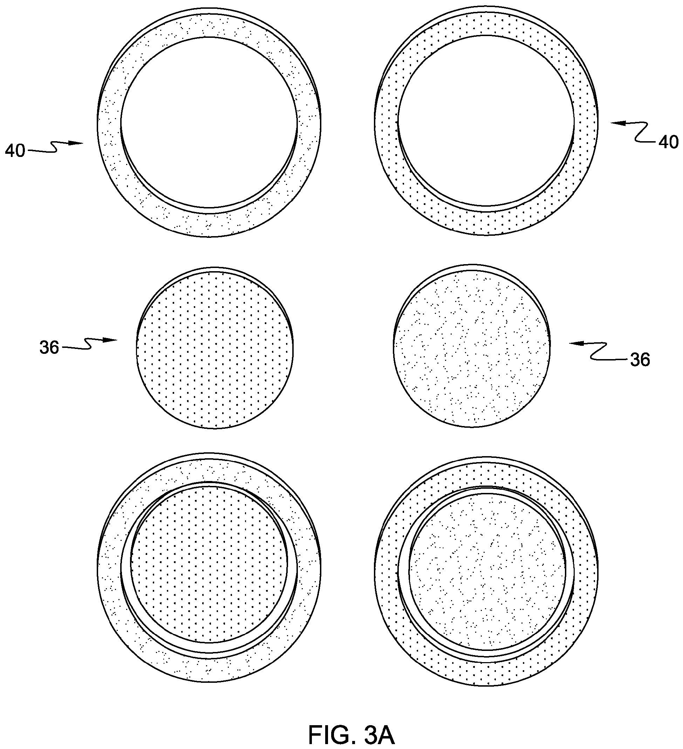

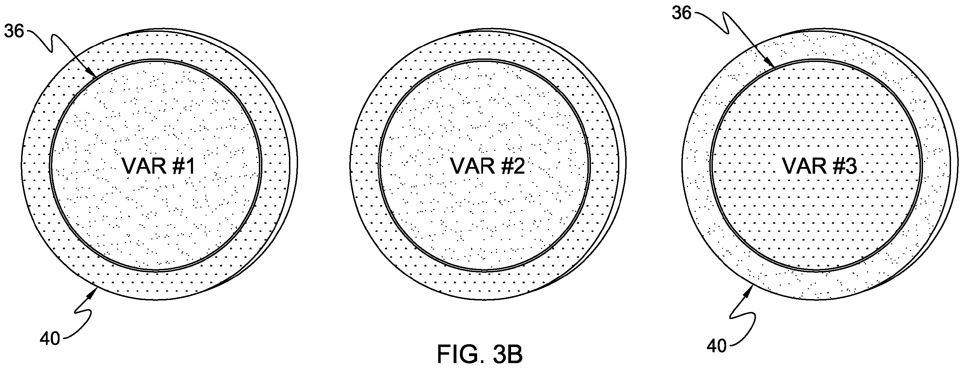

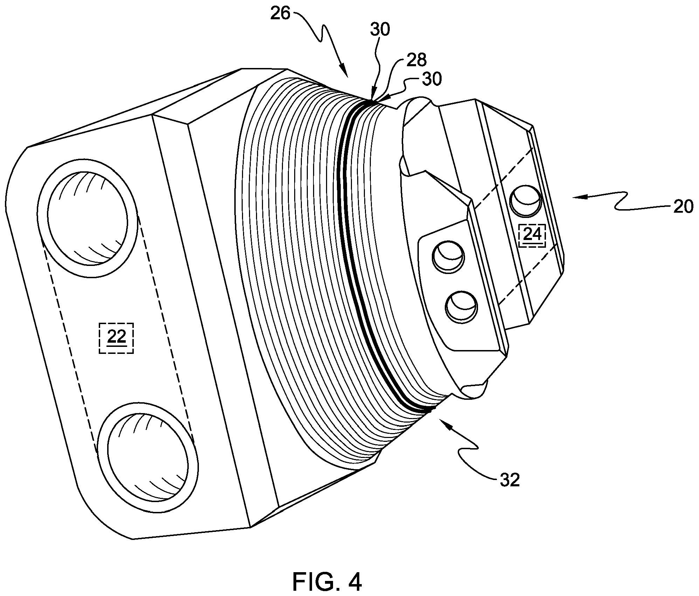

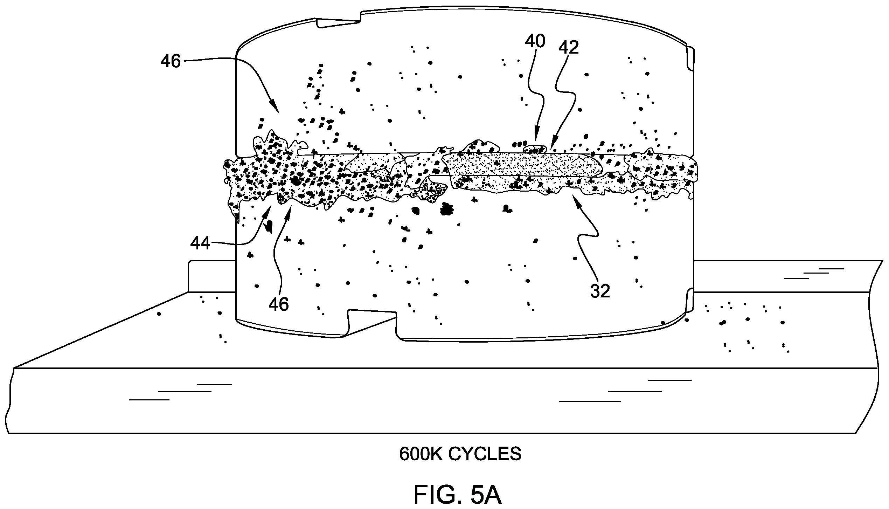

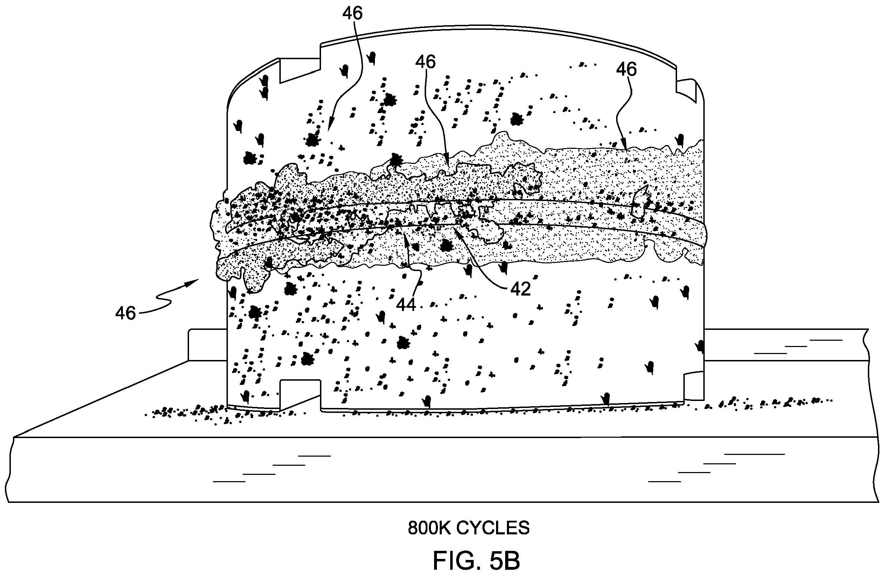

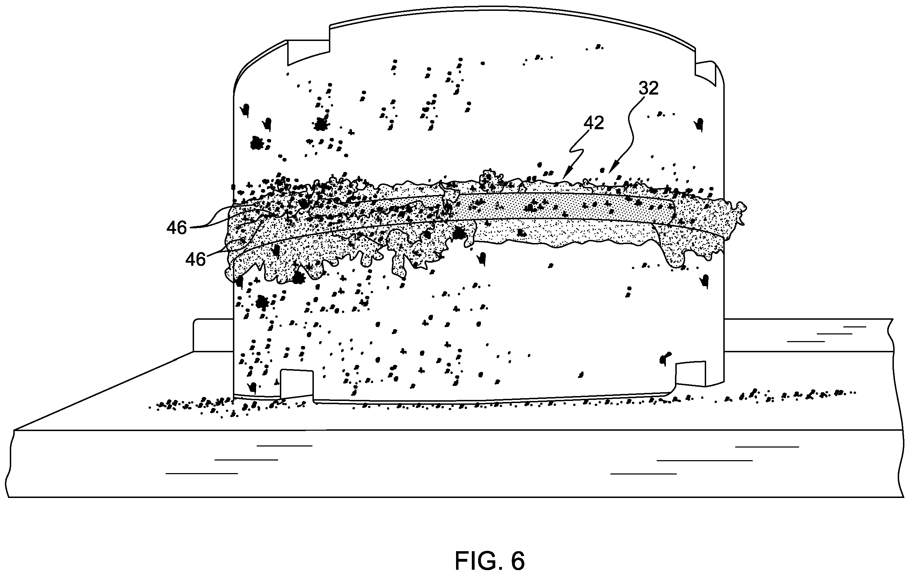

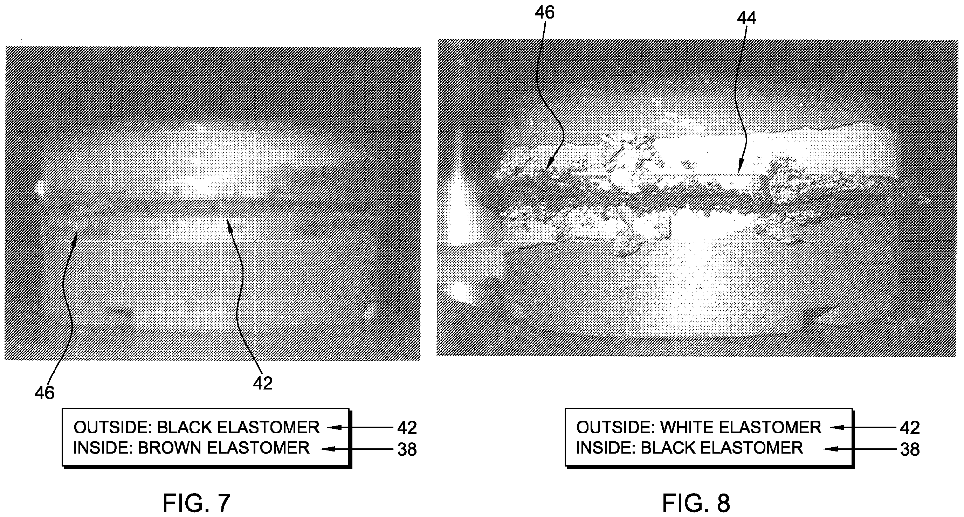

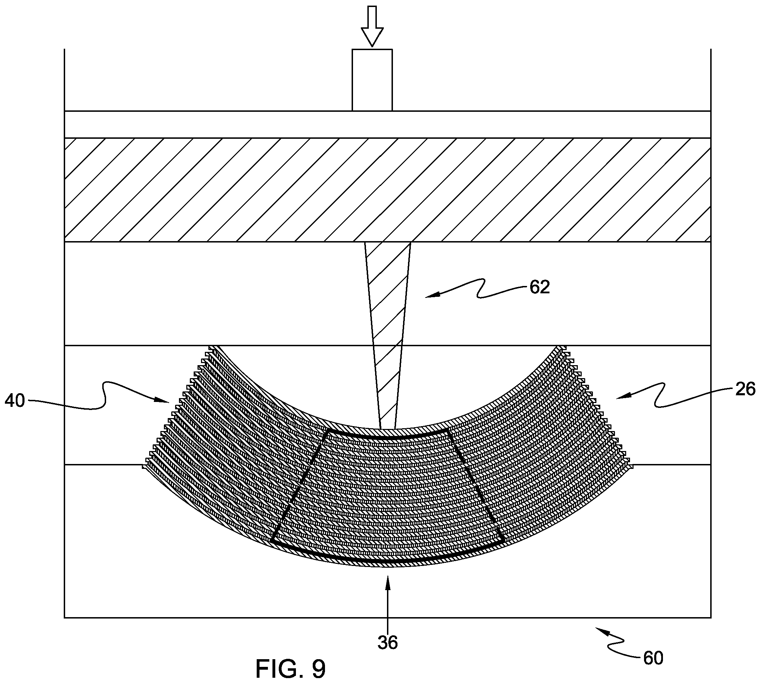

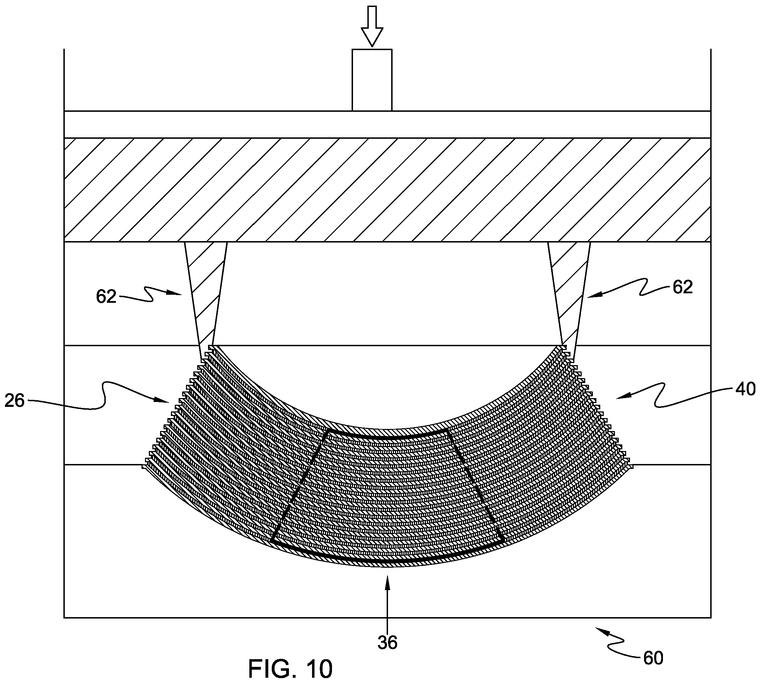

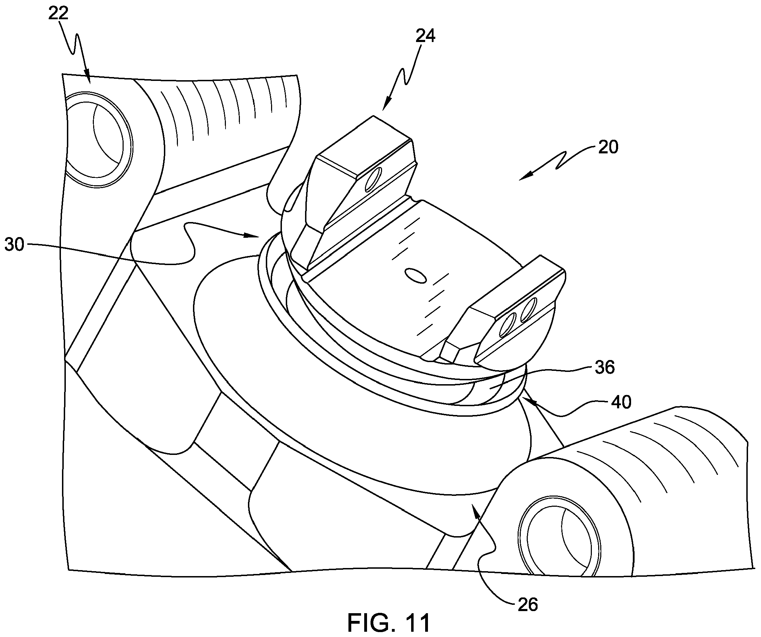

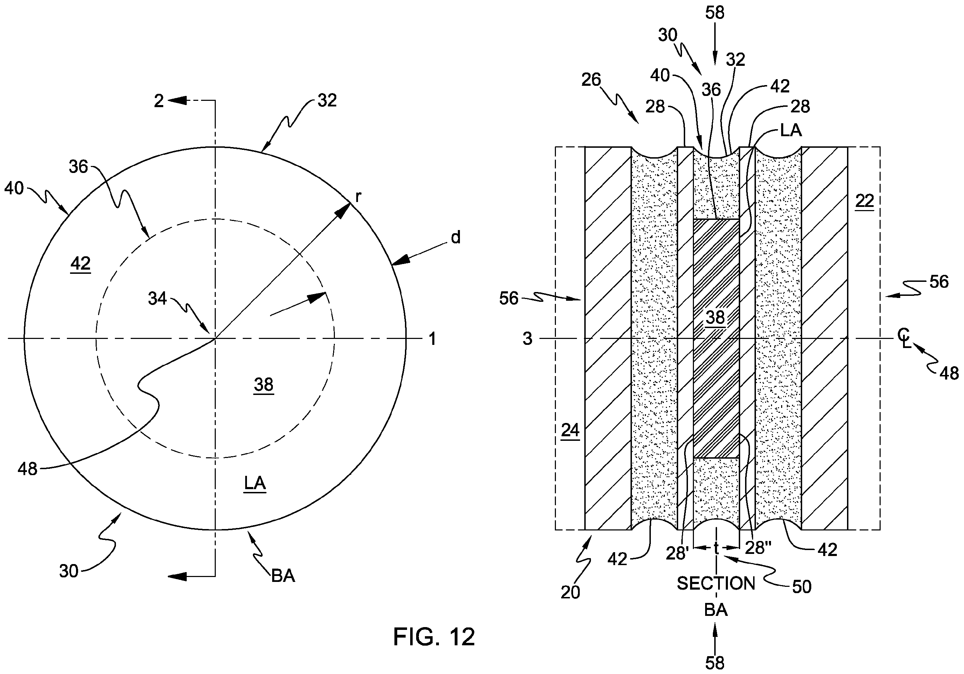

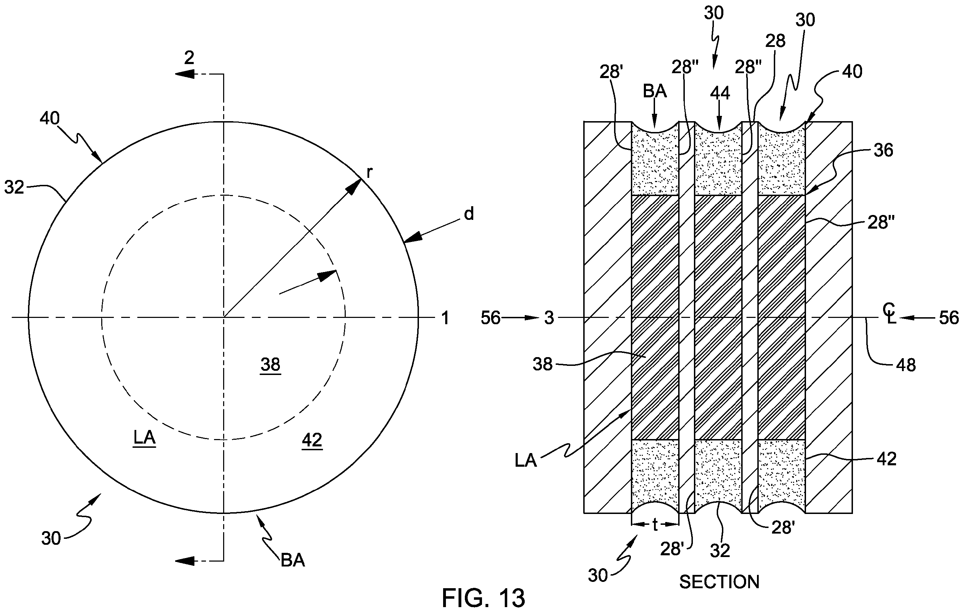

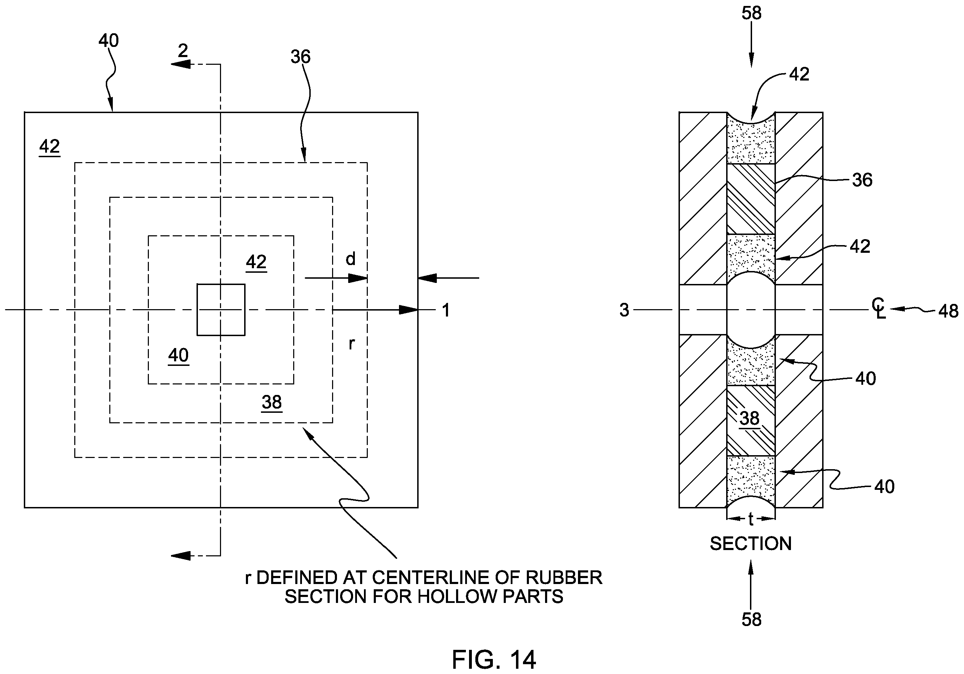

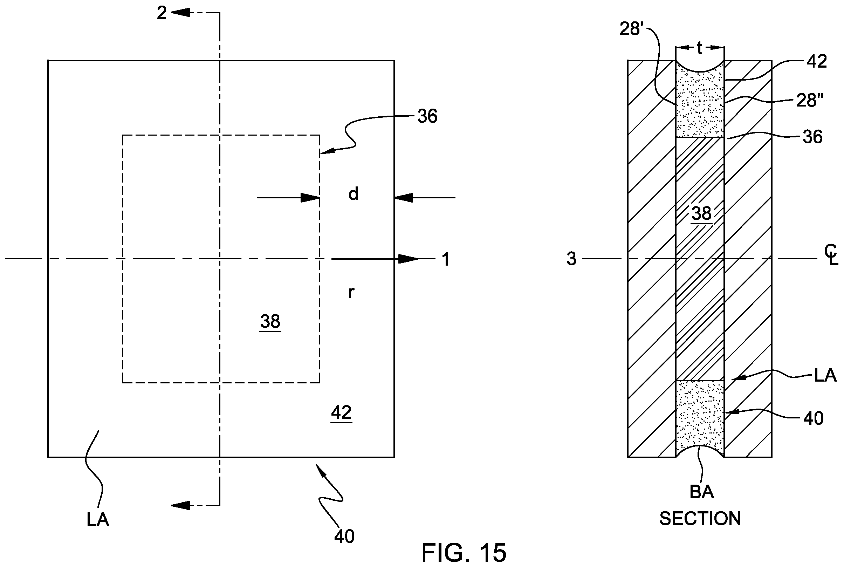

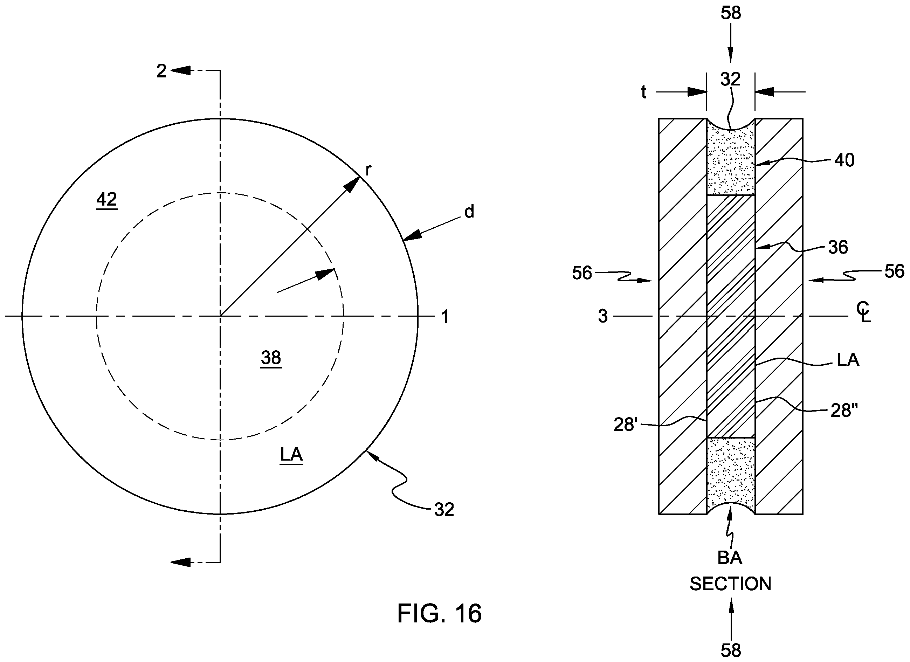

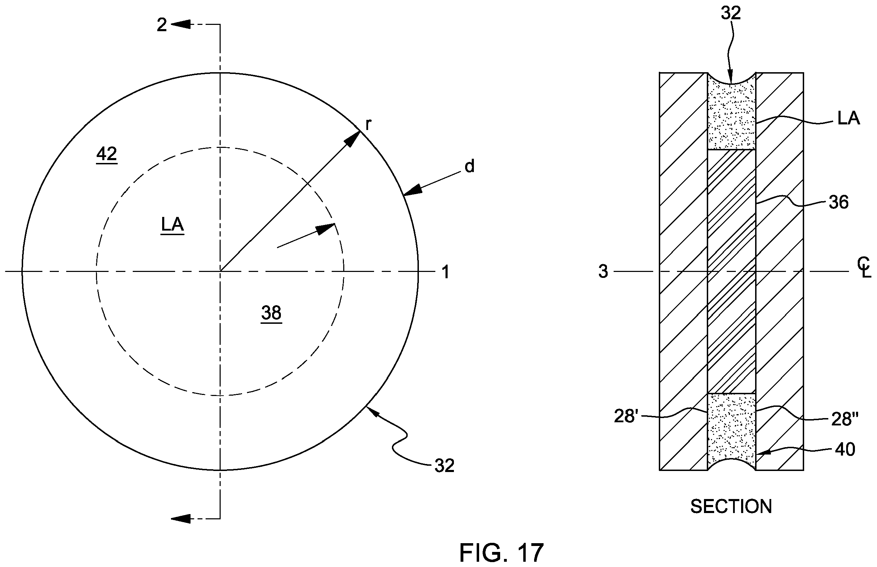

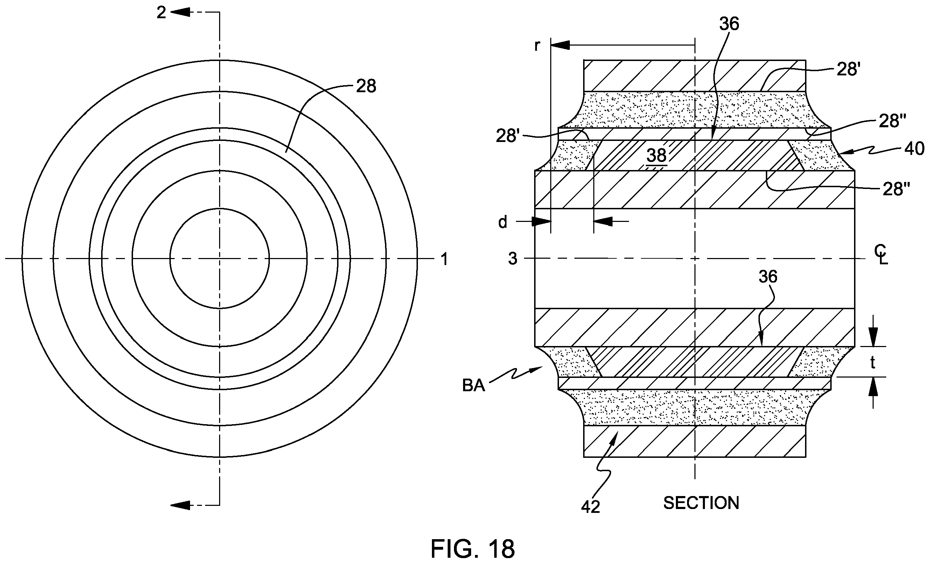

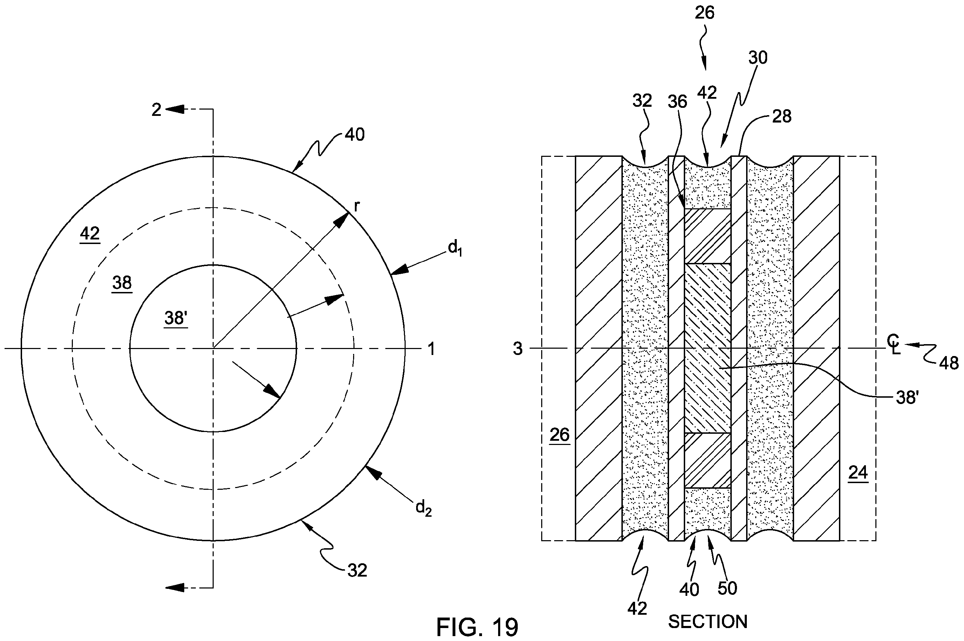

Fig. 1 illustrate rotary wing aircraft bearings with elastomeric mold bonded laminated bearing stacks, the elastomeric mold bonded laminated bearing stack including a plurality of mold bonded alternating layers of nonelastomeric shim member layers and elastomeric shim members layers, the alternating layers of the laminated bearing stack having an exterior surface and an interior center distal from the exterior surface. As illustrated in Fig. 2 at least one of said elastomeric shim members layers has an interior elastomer region distal from said exterior surface, the interior elastomer region comprised of an interior cured elastomer composition having at least a first interior optical characteristic different than the exterior elastomer region. Fig. 3 illustrates illustrate interior elastomer regions comprised of interior elastomer composition having at least a first interior optical characteristic different than the exterior elastomer region, with the elastomer regions shown before they are bonded and cured into an elastomeric shim member layer. Fig. 4 illustrates a rotary wing aircraft bearing with the non-black colored elastomer on the outside exterior surface of two elastomeric shim members layers. In this embodiment the visually distinguishable optical characteristic of the two exterior layers is yellow such that an inspector visually looks for black crumbs from the interior region of the layer accumulated on the yellow exterior. In this embodiment the yellow rubber exterior regions have been disposed in elastomer shim layers five and six of the stack with a depth extending inward into the bearing of 3/8 inch, in the rubber radial dimension range of about 10 to 25%. Elastomer shim layers five and six of the stack were predetermined and selected in that historical studies and testing had shown that these two layers (elastomer shim layers five and six of the stack) are prone to degradation and that bearing elastomeric damage should be expected to develop here first (intentionally targeted and predetermined degradation to occur here first). Fig. 5 illustrates an embodiment with a cured exterior black rubber region and an interior red brown cured elastomer region. Fig. 5A photograph was taken after 600k cycles of a torsion repeated rotary wing motion fatique test. Fig. 5B photograph was taken after 800k cycles of the torsion repeated rotary wing motion test. The torsion repeated rotary wing motion test sample of Fig. 5 was constructed of a single bonded elastomeric shim layer with the fully bonded elastomer layer between the two nonelastomeric metal test ends tested with a high compression load applied by the two nonelastomeric test ends while the 600k and 800k torsion cycles are applied. The interior red brown cured elastomer region was provided with carbon black substitute silica and iron oxide. Fig. 6 illustrates white crumbs from the interior white cured elastomer region of a torsion repeated rotary wing motion fatigue test sample. The white interior region with the encompassing black exterior region was made with centered concentric uncured elastomers such as shown in Fig. 3. Fig. 7 illustrates a torsion repeated rotary wing motion fatigue test sample with an exterior black elastomer region encompassing an interior red brown elastomer region, with brown crumbs expelled from the interior. Fig. 8 illustrates a torsion repeated rotary wing motion fatigue test sample with an exterior white elastomer region encompassing an interior black elastomer region, with black crumbs expelled from the interior. Fig. 9 illustrates mold bonding nonelastomeric shim members and elastomeric shim member layers together to provide an alternating laminated bearing stack with said exterior elastomer region exterior of said interior elastomer region with a mold with a transfer elasomer spue proximate the interior center region with the transferred elastomer visually common with the nontransferred interior elastomer regions shim layers which are layed up between the nonelastomeric shim member layers. Fig. 10 illustrates mold bonding nonelastomeric shim members and elastomeric shim member layers together to provide an alternating laminated bearing stack with said exterior elastomer region exterior of said interior elastomer region with a mold with a transfer elasomer spue proximate the exterior perimeter region with the transferred elastomer visually common with the nontransferred exterior elastomer regions shim layers which are layed up between the nonelastomeric shim member layers. The different optical characteristic elastomer is strategically placed in a predetermined bearing stack location to provide a damage detection indicator, with the different optical characteristic elastomer visible when a damage elastomer void propagates from the exterior surface to a depth of damage importance. Fig. 11 illustrates a two color elastomer marker band placed in a predetermined layer of a rotary wing spherical bearing.

In an embodiment the invention includes a rotary wing aircraft bearing 20 to provide a constrained relative motion between a first rotary wing aircraft member 22 and a second rotary wing aircraft member 24, the bearing 20 including an elastomeric mold bonded laminated bearing stack 26, the elastomeric mold bonded laminated bearing stack 26 including a plurality of mold bonded alternating layers of nonelastomeric shim member layers 28 and elastomeric shim members layers 30, the alternating layers having an exterior surface 32 and an interior center 34 distal from the exterior surface 32. At least one of the elastomeric shim members layers 30 includes an interior elastomer region 36 distal from the exterior surface 32, the interior elastomer region 36 comprised of an interior cured elastomer composition 38 having at least a first interior optical characteristic ingredient. The at least one elastomeric shim members layer 30 includes an exterior elastomer region 40 encompassing the interior elastomer region 36, the exterior elastomer region 40 proximate the exterior surface 32, the exterior elastomer region 40 comprised of an exterior cured elastomer composition 42 having at least a second exterior optical characteristic ingredient, the at least second exterior optical characteristic ingredient different than the interior cured elastomer composition first interior optical characteristic ingredient, wherein with an elastomer void crack 44 propogating from the exterior surface 32 inward towards the interior elastomer region 36 and a repeated rotary wing aircraft relative motion between the first rotary wing aircraft member 22 and the second rotary wing aircraft member 24 generates a plurality of interior cured elastomer composition crumbs 46 to be expelled from the elastomer void 44, the interior cured elastomer composition crumbs 46 optically distinguishable from the exterior cured elastomer composition 42. Preferably a plurality of the elastomeric shim member layers 30 include an interior elastomer region 36 and all of the elastomeric shim member layers exterior elastomer regions 40 are optically distinguishable from the interior elastomer regions 36. Preferably the first interior optical characteristic ingredient is comprised of a dye. Preferably the dye is not soluble in the interior cured elastomer. Preferably the dye is water soluble. Preferably the dye is fluorescent. Preferably the first interior optical characteristic ingredient is comprised of a carbon black substitute. Preferably the carbon black substitute is comprised of silica. Preferably the ingredients further include a nonblack colorant. In an embodiment the interior elastomer region 36 is black and preferably the first interior optical characteristic ingredient is comprised of carbon black. Preferably the exterior elastomer region and the exterior surface are black and the second exterior optical characteristic ingredient is comprised of carbon black. In an embodiment the second exterior optical characteristic ingredient is comprised of a carbon black substitute. Preferably the exterior elastomer region 40 extends inward towards the interior elastomer region 36 with a predetermined exterior elastomer region radial dimension d. Preferably the predetermined exterior elastomer region radial dimension d is in the range from 1% of r to 50% of r with r being the predetermined radial dimension of the elastomeric shim member layer 30, preferably with 2%r≤d≤30%r. Preferably the at least one elastomeric shim member 30 has the predetermined elastomeric shim layer radial dimension r greater than a predetermined exterior elastomer region radial dimension d with d in the range from .01r to .5r , preferably with .02r≤d≤.3r. Preferably the interior elastomer region 36 is centered about a bearing center axis 48 with the interior elastomer region extending outward from the bearing center axis with a predetermined interior elastomer region dimension. Preferably the interior elastomer region predetermined interior elastomer region dimension is r-d. Preferably with hollow elastomer bearing center axis bearings that have a hollow nonelastomer void proximate the center axis 48 the predetermined elastomeric shim layer radial dimension r is from the centerline of the elastomer layer section. Preferably with hollow elastomer bearing center axis bearings the bearing has an inboard exterior surface 32 proximate the center axis 48 and an outboard exterior surface 32 distal from the axis 48. Preferably the at least one elastomeric shim member layer 30 with the interior elastomer region interior cured elastomer composition 38 and the exterior elastomer region exterior cured elastomer composition 42 are disposed at a predetermine degradation position 50 within the laminated bearing stack 26. Preferably the at least one elastomeric shim member layer 30 at the predetermine degradation position 50 within the laminated bearing stack 26 is visible by an observing inspector when installed in the rotary wing aircraft 52, preferably installed in a bearing location 54 in a rotary wing system 53 for bearing a compressive load between the first member 22 and the second member 24 in a first direction 56 and the repeated relative motion comprises an alternating shear load in a first and second shearing direction 58 with the compressive load first direction 56 nonparallel to the first and second shearing direction 58, and preferably substantially perpendicular and normal to the first and second shearing direction 58. Preferably the at least one elastomeric shim member layer 30 with the interior elastomer region interior cured elastomer composition 38 and the exterior elastomer region exterior cured elastomer composition 42 are disposed at a predetermine degradation position 50 within the laminated bearing stack and includes a third elastomer region cured elastomer composition 38' having a third optical characteristic different from the interior elastomer region interior cured elastomer composition 38 and the exterior elastomer region exterior cured elastomer composition 42. Preferably the at least first interior optical characteristic ingredient is comprised of a carbon black substitute and a a nonblack colorant, and the second exterior optical characteristic ingredient is comprised of carbon black. Preferably the carbon black substitute is comprised of silica and the nonblack colorant is a yellow pigment. Preferably the interior elastomer region 36 is yellow and the exterior elastomer region 40 is black. Preferably the at least one elastomeric shim layer 30 is visible by an observing inspector when installed in a bearing location 54 for bearing a compressive load between the first member and the second member in a first direction 56 and the repeated relative motion comprises an alternating shear load in a first and second shearing direction 58 with the compressive load first direction 56 nonparallel and normal to to the first and second shearing direction 58. Preferably the at least one elastomeric shim layer 30 has an elastomer layer thickness t (thickness t in the bearing compressive load first direction 56 between the nonelastomeric members) and an exterior surface bulge area BA, with the elastomeric shim layer 30 having a bonded elastomer interface load area LA (bond interface between elastomer and nonelastomer that elastomer is bonded to), with the elastomeric shim layer 30 having a shape factor SF with .1<SF<60, preferably with SF=LA/BA and .25≤SF≤50. Preferably the preferred range for the interior elastomer region 36 bonded interface load area compared to the total LA is between 25% to 98% of the total LA , prefer 50% to 96% of the total LA. Preferably the at least one elastomeric shim layer 30 with the interior elastomer region interior cured elastomer composition 38 and the exterior elastomer region exterior cured elastomer composition 42 are disposed at a predetermine degradation position 50 within the bearing stack 26 and the exterior elastomer region 40 extends inward towards the interior elastomer region 36 with a predetermined exterior elastomer region radial dimension d, preferably with d in the range from 1% of r to 50% of r, prefer 2%r≤d≤30%r.

In an embodiment the invention may include a method of making a rotary wing aircraft bearing 20 to provide a constrained relative motion between a first rotary wing aircraft member 22 and a second rotary wing aircraft member 24. The method includes providing a plurality of nonelastomeric shim members 28 and providing a plurality of elastomeric shim member layers 30, at least one of the elastomeric shim member layers 30 comprised of an interior elastomer region 36, the interior elastomer region 36 comprised of an interior elastomer composition 38 having at least a first interior optical characteristic ingredient, and an exterior elastomer region 40, the exterior elastomer region comprised of an exterior elastomer composition 42 having at least a second exterior optical characteristic ingredient, the at least second exterior optical characteristic ingredient different than the interior elastomer composition first interior optical characteristic ingredient, the exterior elastomer region 40 disposed exterior from the interior elastomer region 36. The method includes bonding the nonelastomeric shim members 28 and the elastomeric shim member layers 30 together to provide an alternating laminated bearing stack 26 with the exterior elastomer region 40 exterior of the interior elastomer region 36, the exterior elastomer region 40 proximate an exterior surface 32 of the alternating laminated bearing stack 26, the exterior elastomer region 40 comprised of an exterior cured elastomer composition 42, the at least second exterior optical characteristic ingredient different than the interior cured elastomer composition first interior optical characteristic ingredient, wherein with an elastomer void crack 44 propagating from the exterior surface 32 inward towards the interior elastomer region 36 and a repeated rotary wing aircraft relative motion between the first rotary wing aircraft member and the second rotary wing aircraft member generates a plurality of interior cured elastomer composition crumbs 46 to be expelled from the elastomer void 44, the interior cured elastomer composition crumbs 46 optically distinguishable from the exterior cured elastomer composition 42. Preferably the method includes installing the rotary wing aircraft bearing 20 in a rotary wing aircraft 52 with an observable portion of the exterior elastomer region 40 visible to an inspector wherein the optically distinguishable interior cured elastomer composition crumbs 46 are detected by the inspector. Preferably a plurality of the elastomeric shim member layers 30 include an interior elastomer region 36 and all of the elastomeric shim member layers exterior elastomer regions 40 are optically distinguishable from the interior elastomer regions 36. Preferably the first interior optical characteristic ingredient is comprised of a dye. Preferably the dye is not soluble in the interior elastomer. Preferably the dye is water soluble, preferably with the dye fluorescent. Preferably the first interior optical characteristic ingredient is comprised of a carbon black substitute.

Preferably the carbon black substitute is comprised of silica. Preferably the ingredients further include a nonblack colorant. In an embodiment the first interior optical characteristic ingredient is comprised of carbon black, with the second exterior optical characteristic ingredient is comprised of a carbon black substitute. Preferably the second exterior optical characteristic ingredient is comprised of carbon black. Preferably the exterior elastomer region 40 extends inward towards the interior elastomer region 36 with a predetermined exterior elastomer region radial dimension d, preferably with d in the range from 1% of r to 50% of r, preferably 2%r≤d≤30%r. Preferably the at least one elastomeric shim member 30 has a predetermined elastomeric shim layer radial dimension r greater than the predetermined exterior elastomer region radial dimension d with d in the range from .01r to .5r preferably .02r≤d≤.3r. Preferably the interior elastomer region 36 is centered about a bearing center axis 48, with the interior elastomer region 36 extending outward from the bearing center axis with a predetermined interior elastomer region dimension (preferably r-d). Preferably with hollow elastomer bearing bearings with a void proximate the center axis the predetermined elastomeric shim layer radial dimension r is from the centerline of the elastomer layer. Preferably the at least one elastomeric shim member layer 30 with the interior elastomer region interior cured elastomer composition 38 and the exterior elastomer region exterior cured elastomer composition 42 are disposed at a predetermine degredation position 50 within the laminated bearing stack 26. Preferably the at least one elastomeric shim member layer 30 at the predetermine degradation position 50 within the laminated bearing stack 26 is visible by an observing inspector when installed in a rotary wing aircraft 52. Preferably the bearing 20 is installed in a bearing location 54 for bearing a compressive load between the first member and the second member in a first direction 56 and the repeated relative motion comprises an alternating shear load in a first and second shearing direction 58 with the compressive load first direction 56 nonparallel to the first and second shearing direction 58. Preferably the at least one elastomeric shim member layer 30 includes a third elastomer region cured elastomer composition 38' having a third optical characteristic different from the interior elastomer region interior cured elastomer composition 38 and the exterior elastomer region exterior cured elastomer composition 42. Preferably the nonelastomeric shim members 28 and the elastomeric shim member layers 30 are bonded together in a mold 60 with the elastomeric shim member layers 30 cured. Preferably the mold 60 includes a elastomer transfer sprue 62 for transferring additional elastomer into the mold. Preferably the elastomer transfer sprue 62 is proximate the interior elastomer region 36, and preferably the additional elastomer appears optically similar to the interior elastomer composition. Preferably the elastomer transfer sprue 62 is proximate the exterior elastomer region 40, and preferably the additional elastomer appears optically similar to the exterior elastomer composition. Preferably the at least first interior optical characteristic ingredient is comprised of a carbon black substitute and a nonblack colorant, and the second exterior optical characteristic ingredient is comprised of carbon black. Preferably the carbon black substitute is comprised of silica and the nonblack colorant is a yellow pigment. Preferably the interior elastomer region 36 is yellow and the exterior elastomer region 40 is black. Preferably the at least one elastomeric shim layer 30 is visible by an observing inspector when installed in a bearing location 54 for bearing a compressive load between the first member and the second member in a first direction 56 and the repeated relative motion comprises an alternating shear load in a first and second shearing direction 58 with the compressive load first direction 56 nonparallel to the first and second shearing direction 58. Preferably the at least one elastomeric shim layer 30 has an elastomer layer thickness t (thickness t in the bearing compressive load first direction 56 between the members) and an exterior surface bulge area BA, with the elastomeric shim layer having a bonded elastomer interface load area LA (bond interface between elastomer and nonelastomer that elastomer is bonded to) , with the elastomeric shim layer having a shape factor SF with .1<SF<60 , preferably with SF=LA/BA, and preferably .25≤SF≤50. Preferably the interior elastomer region bonded interface load area compared to the total LA is between 25% to 98% of the total LA , preferably 50% to 96% of the total LA. Preferably the at least one elastomeric shim layer 30 with the interior elastomer region interior cured elastomer composition 38 and the exterior elastomer region exterior cured elastomer composition 42 are disposed at a predetermine degradation position 50 within the bearing stack and the exterior elastomer region 40 extends inward towards the interior elastomer region 36 with a predetermined exterior elastomer region radial dimension d, preferably with d in the range from 1% of r to 50% of r , preferably with 2%r≤d≤30%r.

In an embodiment the invention may include a rotary wing aircraft bearing 20 to provide a rotary wing motion between a first rotary wing aircraft member 22 and a second rotary wing aircraft member 24. The bearing 20 includes an elastomeric bonded laminated bearing stack 26, the elastomeric bonded laminated bearing stack including a plurality of bonded alternating layers of nonelastomeric shim member layers 28 and elastomeric shim members layers 30. The bearing 20 includes a predetermined first elastomeric shim members layer 30 comprised of a first elastomer region 36, the first elastomer region 36 comprised of an first cured elastomer composition 38 having at least a first optical characteristic ingredient, and a second elastomer region 40, the second elastomer region 40 proximate an exterior surface 32, the second elastomer region 40 comprised of a second cured elastomer composition 42 having at least a second optical characteristic ingredient, the at least second optical characteristic ingredient different than the first cured elastomer composition first optical characteristic ingredient, wherein a rotary wing motion elastomer void crack 44 propogating from the exterior surface 32 inward towards an interior of the bearing interior elastomer region with the rotary wing motion generates a plurality of first cured elastomer composition crumbs 46 expelled from the elastomer void 44, the first cured elastomer composition crumbs 46 optically distinguishable from the second cured elastomer composition 42. Preferably the predetermined first elastomeric shim layer 30 has a predetermined stack position 50 within the elastomeric bonded laminated bearing stack 26.

In an embodiment the invention may include a bearing 20 to provide a constrained relative motion between a first member and a second member, the bearing 20 including an elastomeric mold bonded bearing stack 26, the elastomeric mold bonded bearing stack 26 including at least a first mold bonded elastomeric shim layer 30, the at least first mold bonded elastomeric shim layer 30 having an exterior surface 32 and an enclosed interior center 34 distal from the exterior surface 32. The elastomeric shim layer 30 includes an enclosed interior elastomer region 36 distal from the exterior surface 32, the interior elastomer region 36 comprised of an interior cured elastomer composition 38 having at least a first interior optical characteristic ingredient. The elastomeric shim layer 30 includes an exterior elastomer region 40 encompassing the interior elastomer region 36, the exterior elastomer region 40 proximate the exterior surface 32, the exterior elastomer region 40 comprised of an exterior cured elastomer composition 42 having at least a second exterior optical characteristic ingredient, the at least second exterior optical characteristic ingredient different than the interior cured elastomer composition first interior optical characteristic ingredient, wherein an elastomer void crack 44 propogating from the exterior surface 32 inward towards the interior elastomer region 36 and a repeated relative motion between the first member and the second member generates a plurality of interior cured elastomer composition crumbs 46 to be expelled from the elastomer void 44, the interior cured elastomer composition crumbs 46 optically distinguishable from the exterior cured elastomer composition 42. Preferably the interior cured elastomer composition crumbs 46 come from and are formed from the interior cured elastomer composition 38, preferably the solid interior cured elastomer of region 36 is broken up into crumbs 46 with the repeated relative motion proximate an interior portion of the propogating crack 44 and expelled outward towards the exterior 32, the interior cured elastomer composition crumbs optically distinguishable from exterior elastomer composition and cured elastomer composition crumbs. Preferably the bearing 20 is installed in a bearing location 54 for bearing a compressive load between the first member and the second member in a first direction 56 and the repeated relative motion comprises an alternating shear load in a first and second shearing direction 58 with the compressive load first direction nonparallel to the first and second shearing direction 58, preferably with the bearing installed the crumbs 46 are visible by an observing inspector. Preferably the expelled interior cured elastomer composition crumbs 46 are persistent in that they preferably collect and stick to the exterior surface 32, preferably remaining when exposed to a fluid stream, such as the bearing 20 moving through air or a water stream/current applied to the bearing. Preferably a plurality of the mold bonded elastomeric shim layers 30 have the interior elastomer region 36 and all of the elastomeric shim layers exterior elastomer regions 40 are optically distinguishable from the interior elastomer regions 36. Preferably the first interior optical characteristic ingredient is comprised of a dye, preferably wherein the dye is not soluble in the interior cured elastomer. Preferably the dye is water soluble, preferably the dye is fluorescent. Preferably the first interior optical characteristic ingredient is comprised of a carbon black substitute, preferably wherein the carbon black substitute is comprised of silica. Preferably the ingredients further include a nonblack colorant. In an embodiment the first interior optical characteristic ingredient is comprised of carbon black, and the second exterior optical characteristic ingredient is comprised of a carbon black substitute. Preferably the second exterior optical characteristic ingredient is comprised of carbon black. Preferably the exterior elastomer region 40 extends inward towards the interior elastomer region 36 with a predetermined exterior elastomer region radial dimension d, preferably with d in the range from 1% of r to 50% of r, preferably 2%r≤d≤30%r. Preferably the first mold bonded elastomeric shim layer 30 has a predetermined elastomeric shim layer radial dimension r greater than predetermined exterior elastomer region radial dimension d with d in the range from .01r to .5r , preferably .02r≤d≤.3r. Preferably the interior elastomer region 36 is centered about a bearing center axis 48, with the interior elastomer region 36 extending outward. Preferably with hollow elastomer bearing centers r is at the centerline of the elastomer layer section. Preferably the at least one elastomeric shim layer 30 with the interior elastomer region interior cured elastomer composition 38 and the exterior elastomer region exterior cured elastomer composition 42 are disposed at a predetermine degradation position 50 within the bearing stack 26.

Preferably the at least one elastomeric shim layer 30 at the predetermine degradation position 50 within the bearing stack is visible by an observing inspector when installed in a bearing location 54 for bearing a compressive load between the first member and the second member in a first direction 56 and the repeated relative motion comprises an alternating shear load in a first and second shearing direction 58 with the compressive load first direction 56 nonparallel and preferably normal to the first and second shearing direction 58. Preferably the at least one elastomeric shim layer 30 with the interior elastomer region interior cured elastomer composition 38 and the exterior elastomer region exterior cured elastomer composition 42 are disposed at a predetermine degradation position 50 within the bearing stack 26 and include a third elastomer region cured elastomer composition 38' having a third optical characteristic different from the interior elastomer region interior cured elastomer composition 38 and the exterior elastomer region exterior cured elastomer composition 42. Preferably the at least one elastomeric shim layer 30 within the bearing stack 26 is visible by an observing inspector when installed in a bearing location 54 for bearing a compressive load between the first member and the second member in a first direction 56 and the repeated relative motion comprises an alternating shear load in a first and second shearing direction 58 with the compressive load first direction 56 nonparallel to the first and second shearing direction 58. Preferably the at least one elastomeric shim layer 30 has an elastomer layer thickness t (thickness t in the bearing compressive load first direction 56 between the members) and an exterior surface bulge area BA, with the elastomeric shim layer having a bonded elastomer interface load area LA (bond interface between elastomer and nonelastomer that elastomer is bonded to) with the elastomeric shim layer 30 having a shape factor SF with .1<SF<60. Preferably with layer 30 SF=LA/BA, preferably with .25≤SF≤50. Preferably with layer 30 the preferred range for the interior elastomer region bonded interface load area compared to the total LA is between 25% to 98% of the total LA, preferably 50% to 96% of the total LA. Preferably the at least one elastomeric shim layer 30 with the interior elastomer region interior cured elastomer composition 38 and the exterior elastomer region exterior cured elastomer composition 42 are disposed at a predetermine degradation position within the bearing stack and the exterior elastomer region extends inward towards the interior elastomer region with a predetermined exterior elastomer region radial dimension d, preferably with d in the range from 1% of r to 50% of r , preferably 2%r≤d≤30%r. Preferably the at least first interior optical characteristic ingredient is comprised of a carbon black substitute and a nonblack colorant, and the second exterior optical characteristic ingredient is comprised of carbon black. Preferably the carbon black substitute is comprised of silica and the nonblack colorant is a yellow pigment. Preferably the interior elastomer region is yellow and the exterior elastomer region is black. Preferably the bearing is a rotary wing aircraft bearing for a rotary wing aircraft, with the bearing installed in a rotary wing system of a rotary wing aircraft.

In an embodiment the invention may include a method of making a bearing 20 to provide a constrained relative motion between a first member and a second member, the method includes providing at least a first nonelastomeric member surface 28' and at least a second nonelastomeric member surface 28". The method includes providing at least a first elastomeric shim layer 30 between the first nonelastomeric member surface 28' and the at least second nonelastomeric member surface 28" in a mold 60, and bonding the first elastomeric shim layer 30 to the first nonelastomeric member surface 28' and the second nonelastomeric member surface 28" in the mold 60 to provide an elastomeric mold bonded bearing stack 26, with first mold bonded elastomeric shim layer 30 having an exterior surface 32 and an interior center 34 distal from the exterior surface 32, the elastomeric shim layer 30 comprised of an enclosed interior bonded elastomer region 36 distal from the exterior surface 32, the interior elastomer region 36 comprised of an interior cured elastomer composition 38 having at least a first interior optical characteristic ingredient, and the elastomeric shim layer 30 comprised of an exterior bonded elastomer region 40 encompassing the interior bonded elastomer region 36, the exterior elastomer region 40 proximate the exterior surface 32, the exterior elastomer region 40 comprised of an exterior cured elastomer composition 42 having at least a second exterior optical characteristic ingredient, the at least second exterior optical characteristic ingredient different than the interior cured elastomer composition first interior optical characteristic ingredient, wherein an elastomer void crack 44 propogating from the exterior surface 32 inward towards the interior elastomer region 36 and a repeated relative motion between the first member and the second member generates a plurality of interior cured elastomer composition crumbs 46 to be expelled from the elastomer void 44, the interior cured elastomer composition crumbs 46 optically distinguishable from the exterior cured elastomer composition 42. Preferably the interior cured elastomer composition crumbs 46 are formed from pieces of the interior cured elastomer composition 38 that migrate to the surface, preferably the solid interior cured elastomer 38 is broken up into crumbs with the repeated relative motion proximate an interior portion of the propogating crack 44 and expelled outward towards the exterior 32, with the interior cured elastomer composition crumbs 46 optically distinguishable from the exterior cured elastomer composition crumbs. Preferably the bearing 20 is installed in a bearing location 54 for bearing a compressive load between the first member and the second member in a first direction 56 and the repeated relative motion comprises an alternating shear load in a first and second shearing direction 58 with the compressive load first direction 56 nonparallel and substantially perpendicular to the first and second shearing direction 58. Preferably when installed the crumbs 46 are visible to an observing inspector. Preferably the expelled interior cured elastomer composition crumbs 46 are persistent in that they preferably collect and stick to the exterior surface 32, preferably remaining when exposed to a fluid stream, such as the bearing 20 moving through air or a water stream/current applied to the bearing. Preferably the method includes providing a plurality elastomeric shim layers 30 with the interior elastomer region 36, the plurality of elastomeric shim layers 30 with the interior elastomer region 36 laminated between a plurality of nonelastomeric member surfaces 28',28" with the plurality of elastomeric shim layers exterior elastomer regions 40 optically distinguishable from the interior elastomer regions 36. Preferably the first interior optical characteristic ingredient is comprised of a dye, preferably the dye is not soluble in the interior cured elastomer, preferably wherein the dye is water soluble. Preferably the dye is fluorescent. Preferably the first interior optical characteristic ingredient is comprised of a carbon black substitute, preferably with the carbon black substitute comprised of silica. Preferably the ingredients further include a nonblack colorant. In an embodiment the first interior optical characteristic ingredient is comprised of carbon black, preferably with the second exterior optical characteristic ingredient is comprised of a carbon black substitute. Preferably the second exterior optical characteristic ingredient is comprised of carbon black. Preferably the exterior elastomer region 40 extends inward towards the interior elastomer region 36 with a predetermined exterior elastomer region radial dimension d, preferably with d in the range from 1% of r to 50% of r, preferably with 2%r≤d≤30%r. Preferably the first mold bonded elastomeric shim layer has a predetermined elastomeric shim layer radial dimension r greater than a predetermined exterior elastomer region radial dimension d with d in the range from .01r to .5r, preferably with .02r≤d≤.3r. Preferably the interior elastomer region is centered about a bearing center axis 48, with the interior elastomer region extending outward away from the bearing center axis with a predetermined interior elastomer region dimension, preferably r-d. Preferably with hollow elastomer bearings 20 with an elastomer hollow void at the center axis 48, the predetermined elastomeric shim layer radial dimension r is from the centerline of the elastomer layer section. Preferably the at least one elastomeric shim layer 30 with the interior elastomer region interior cured elastomer composition 38 and the exterior elastomer region exterior cured elastomer composition 42 are disposed at a predetermine degradation position 50 within the bearing stack 26. Preferably the at least one elastomeric shim layer 30 at the predetermine degradation position 50 within the bearing stack is visible by an observing inspector when installed in a bearing location 54 for bearing a compressive load between the first member and the second member in a first direction 56 and the repeated relative motion comprises an alternating shear load in a first and second shearing direction 58 with the compressive load first direction 56 nonparallel to the first and second shearing direction 58. Preferably the at least one elastomeric shim layer 30 with the interior elastomer region interior cured elastomer composition 38 and the exterior elastomer region exterior cured elastomer composition 42 are disposed at a predetermine degradation position 50 within the bearing stack and include a third elastomer region cured elastomer composition 38' having a third optical characteristic different from the interior elastomer region interior cured elastomer composition 38 and the exterior elastomer region exterior cured elastomer composition 42.

Preferably the at least one elastomeric shim layer 30 within the bearing stack is visible by an observing inspector when installed in a bearing location 50 for bearing a compressive load between the first member and the second member in a first direction and the repeated relative motion comprises an alternating shear load in a first and second shearing direction with the compressive load first direction nonparallel to the first and second shearing direction. Preferably the at least one elastomeric shim layer 30 has an elastomer layer thickness t (thickness t in the bearing compressive load first direction 56 between the members) and an exterior surface bulge area BA, with the elastomeric shim layer having a bonded elastomer interface load area LA (bond interface between elastomer and nonelastomer surface area 28', 28" that the elastomer is bonded to), with the elastomeric shim layer having a shape factor SF with .1<SF<60. Preferably SF=LA/BA, preferably . with 25≤SF≤50. Preferably the interior elastomer region bonded interface load area compared to the total LA is between 25% to 98% of the total LA , preferably 50% to 96% of the total LA. Preferably the at least one elastomeric shim layer 30 with the interior elastomer region interior cured elastomer composition 38 and the exterior elastomer region exterior cured elastomer composition 42 are disposed at a predetermine degradation position 50 within the bearing stack and the exterior elastomer region 40 extends inward towards the interior elastomer region 36 with a predetermined exterior elastomer region radial dimension d, preferably with d in the range from 1% of r to 50% of r, preferably with 2%r≤d≤30%r. Preferably the at least first interior optical characteristic ingredient is comprised of a carbon black substitute and a nonblack colorant, and the second exterior optical characteristic ingredient is comprised of carbon black, preferably with the carbon black substitute comprised of silica and the nonblack colorant is a yellow pigment. Preferably the interior elastomer region is yellow and the exterior elastomer region is black. Preferably the bearing is a rotary wing aircraft bearing for a rotary wing aircraft, with the bearing installed in a rotary wing system of a rotary wing aircraft.

Preferably the interior elastomer composition 38 is a fully functioning elastomer constituent of the bearing assembly. Preferably the interior elastomer composition 38 is in the path where damage propagates through the bearing assembly part. Preferably the interior elastomer region 36 is a colored elastomer in a working section of the elastomer rubber which is not visible when the part is new and removed from the mold and is in the degradation path where after installation and from in-service use conditions is predetermined that degradation elastomer void crack growth should occur and is at a depth from the exterior surface which is calibrated to the bearing part's replacement criteria. Preferably the expelled interior crumbs 46 provide a persistent visual indicator of when to replace a elastomer rubber bearing part so that the observing inspector operator does not need to be in sight of the elastomer rubber bearing part all the time, and preferably does not need to observe the part during repeated relative motions. Preferably the exterior surface 32 and the exterior elastomer region 40 do not wear away during the installed use. Preferably the interior elastomer composition 38 is disposed and cured in place at a predetermined depth below the surface 32 wherein a likely crack initiation site should originate in a predetermined degradation position and the crack propagation into the interior elastomer region 36 brings the colored elastomer material composition 38 to the surface 32.

Preferably the contrasting particle interior crumbs 46 are expelled outward to the surface 32 with such migrating from the crack propagation front of crack 44.

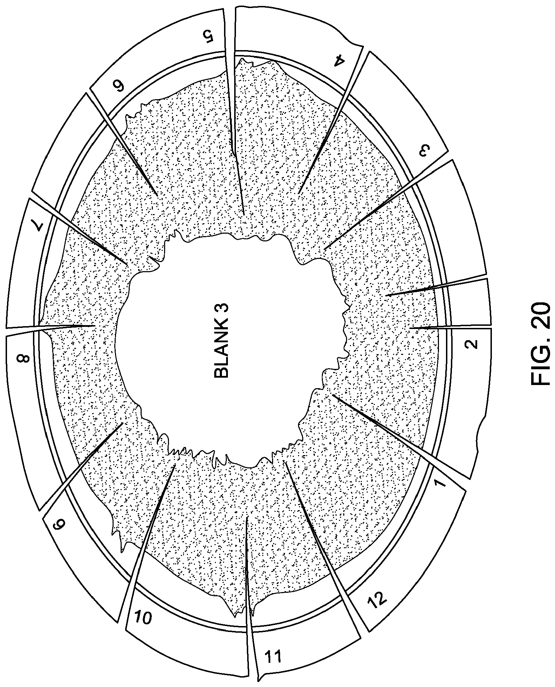

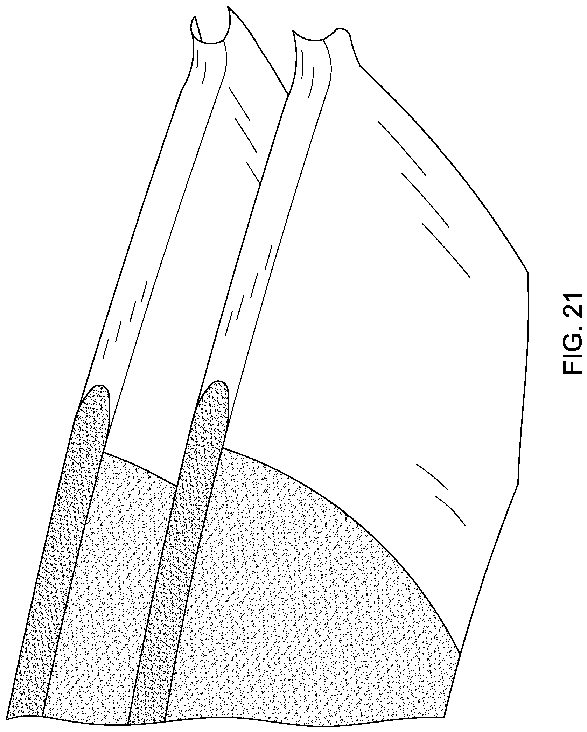

A preferred embodiment includes yellow contrasting material elastomer composition 38 with a host black material elastomer composition 42. Such yellow contrasting elastomer composition 38 with exterior black elastomer composition 42 is shown in FIG. 20 and 21 with the yellow elastomer showing high contrast and edge view of two layers showing a predetermined uniform d dimension.

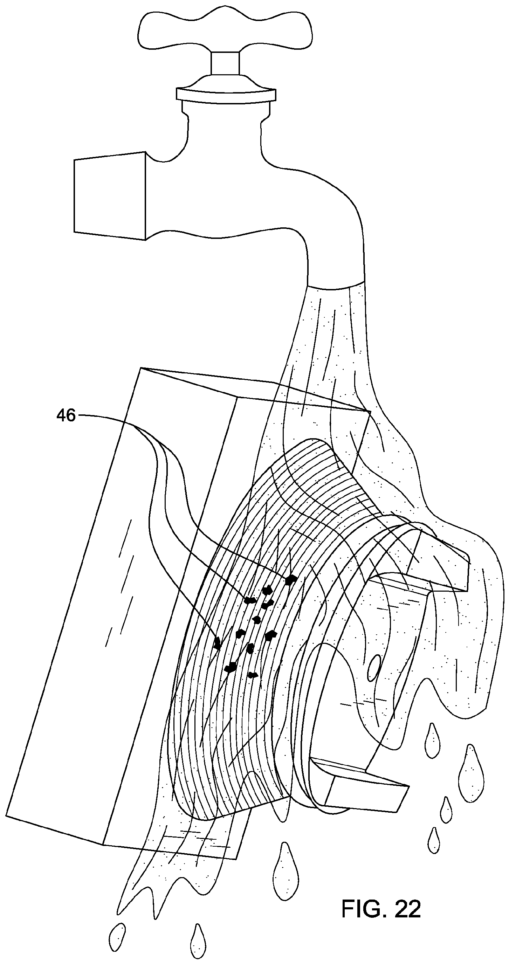

Preferably the elastomer particle crumbs 46 are sticky and persist on the surface 32 the bearing part and are therefore providing a persistent indicator. FIG. 22 show that yellow rubber particles 46 stay on the bearing part under a forceful stream of water. Preferably the colored elastomer interior region 36 is in such a predetermined location with a predetermined edge distance dimension wherein the elastomer particle crumbs 46 comes to the surface 32 at a predetermined point of remaining service life of the bearing 20, preferably calibrated by testing of such bearings 20.

## Claims

1. A bearing (20) to provide a constrained relative motion between a first member (22) and a second member (24), said bearing (20) including:
an elastomeric mold bonded bearing stack (26), said elastomeric mold bonded bearing stack (26) including at least a first nonelastomeric member layer (28) and at least a second nonelastomeric member layer (28), at least a first mold bonded elastomeric shim layer (30), said at least first mold bonded elastomeric shim layer (30) having an exterior surface (32) and an interior center (34) distal from said exterior surface (32), said at least first mold bonded elastomeric shim layer (30) positioned between said at least a first nonelastomeric member layer (28) and at least a second nonelastomeric member layer (28),
wherein said elastomeric shim layer (30) comprises an enclosed interior elastomer region (36) distal from said exterior surface (32), said interior elastomer region (36) comprising an interior cured elastomer composition (38) having at least a first interior optical characteristic ingredient,
**characterized in that** said elastomeric shim layer (30) comprises an exterior elastomer region (40) encompassing said interior elastomer region (36), said exterior elastomer region (40) proximate said exterior surface (32), said exterior elastomer region (40) comprising an exterior cured elastomer composition (42) having at least a second exterior optical characteristic ingredient, said at least second exterior optical characteristic ingredient different than said interior cured elastomer composition (38) first interior optical characteristic ingredient, wherein an elastomer void crack (44) propagating from said exterior surface (32) inward towards said interior elastomer region (36),
the bearing being configured such that a repeated relative motion between said first member (22) and said second member (24) generates a plurality of interior cured elastomer composition crumbs (46) to be expelled from said elastomer void crack (44) towards the exterior elastomer region, said interior cured elastomer composition crumbs (46) optically distinguishable from said exterior cured elastomer composition (42), said interior elastomer region (36) optical characteristic ingredient difference providing a visual crack depth determination.

2. A bearing (20) as claimed in claim 1 with a plurality of said mold bonded elastomeric shim layers (30) with said interior elastomer region (36) and all of said elastomeric shim layers (30) exterior elastomer regions (40) are optically distinguishable from said interior elastomer regions (36).

3. A bearing (20) as claimed in either preceding claim wherein said first interior optical characteristic ingredient comprises a pigment or a dye, said pigment or dye being insoluble in said interior cured elastomer composition (38).

4. A bearing (20) as claimed in any preceding claim wherein said pigment or dye is water soluble and fluorescent.

5. A bearing (20) as claimed in any preceding claim wherein said exterior elastomer region (40) extends inward towards said interior elastomer region (36) with a predetermined exterior elastomer region (40) radial dimension.

6. A bearing (20) as claimed in any preceding claim wherein said first mold bonded elastomeric shim layer (30) has a predetermined elastomeric shim layer radial dimension r greater than a predetermined exterior elastomer region radial dimension d with d in the range from .01r to .5r.

7. A bearing (20) as claimed in any preceding claim wherein said interior elastomer region (36) is centered about a bearing center axis (48), with said interior elastomer region (36) extending outward from said bearing center axis (48) with a predetermined interior elastomer region (36) dimension.

8. A bearing (20) as claimed in any preceding claim through 7 wherein said at least one elastomeric shim layer (30) with said interior elastomer region (36) interior cured elastomer composition (38) and said exterior elastomer region (40) exterior cured elastomer composition (42) are disposed at a predetermine degradation position (50) within said bearing stack (26).

9. A bearing (20) as claimed in claim 8 wherein said at least one elastomeric shim layer (30) at said predetermine degradation position (50) within said bearing stack (26) is visible by an observing inspector when installed in a bearing location (54) for bearing a compressive load between said first member (22) and said second member (24) in a first direction (56) and said repeated relative motion comprises an alternating shear load in a first and second shearing direction (58) with said compressive load first direction (56) nonparallel to said first and second shearing direction (58).

10. A bearing (20) as claimed in any preceding claim wherein said at least one elastomeric shim layer (30) with said interior elastomer region (36) interior cured elastomer composition (38) and said exterior elastomer region (40) exterior cured elastomer composition (42) are disposed at a predetermined degradation position (50) within said bearing stack (26) and include a third elastomer region cured elastomer composition (38') having a third optical characteristic different from said interior elastomer region (36) interior cured elastomer composition (38) and said exterior elastomer region (40) exterior cured elastomer composition (42).

11. A bearing (20) as claimed in any preceding claim wherein said at least one elastomeric shim layer (30) has an elastomer layer thickness t and an exterior surface bulge area BA, with said elastomeric shim layer (30) having a bonded elastomer interface load area LA, with said elastomeric shim layer (30) having a shape factor SF with .1<SF<60.

12. A bearing (20) as claimed in any preceding claim wherein said at least one elastomeric shim layer (30) with said interior elastomer region (36) interior cured elastomer composition (38) and said exterior elastomer region (40) exterior cured elastomer composition (42) are disposed at a predetermined degradation position (50) within said bearing stack (26) and said exterior elastomer region (40) extends inward towards said interior elastomer region (36) with a predetermined exterior elastomer region radial dimension.

13. A bearing (20) as claimed in any preceding claim wherein said at least first interior optical characteristic ingredient comprises a carbon black substitute and a yellow pigment nonblack colorant, and said second exterior optical characteristic ingredient is comprised of carbon black.

14. A method of making a bearing (20) to provide a constrained relative motion between a first member (22) and a second member (24), said method including:
providing at least a first nonelastomeric member surface (28') and at least a second nonelastomeric member surface (28"),
providing at least a first elastomeric shim layer (30) between said first nonelastomeric member surface (28') and said at least second nonelastomeric member surface (28") in a mold (60), and
**characterized in that** said method includes bonding said first elastomeric shim layer (30) to said first nonelastomeric member surface (28') and said second nonelastomeric member surface (28") in said mold (60) to provide an elastomeric mold bonded bearing stack (26), with first mold bonded elastomeric shim layer (30) having an exterior surface (32) and an interior center (34) distal from said exterior surface (32), said elastomeric shim layer (32) comprising an enclosed interior bonded elastomer region (36) distal from said exterior surface (32), said interior elastomer region (36) comprising an interior cured elastomer composition (38) having at least a first interior optical characteristic ingredient, and said elastomeric shim layer (30) comprising an exterior bonded elastomer region (40) encompassing said interior bonded elastomer region (36), said exterior elastomer region (40) proximate said exterior surface (32), said exterior elastomer region (40) comprising an exterior cured elastomer composition (42) having at least a second exterior optical characteristic ingredient, said at least second exterior optical characteristic ingredient different than said interior cured elastomer composition (38) first interior optical characteristic ingredient, wherein an elastomer void crack (44) propagating from said exterior surface (32) inward towards said interior elastomer region (36) and a repeated relative motion between said first member (22) and said second member (24) generates a plurality of interior cured elastomer composition crumbs (46) to be expelled from said elastomer void crack (44) towards the exterior elastomer region, said interior cured elastomer composition crumbs (46) optically distinguishable from said exterior cured elastomer composition (42), said interior elastomer region (36) optical characteristic ingredient difference providing a visual crack depth determination.

15. A method as claimed in claim 14 including providing a plurality elastomeric shim layers (30) with said interior elastomer region (36), said plurality elastomeric shim layers (30) with said interior elastomer region (36) laminated between a plurality of nonelastomeric member surfaces (28', 28"), with said plurality elastomeric shim layers (30) exterior elastomer regions (40) optically distinguishable from said interior elastomer regions (36).

16. A method as claimed in claim 14 or 15 further comprising providing said first interior optical characteristic ingredient comprises a pigment or a dye, said pigment or dye being fluorescent water soluble that is insoluble in said interior cured elastomer composition (38).

17. A method as claimed in claim 14 wherein said exterior elastomer region (40) extends inward towards said interior elastomer region (36) with a predetermined exterior elastomer region radial dimension.

18. A method as claimed in claim 14 wherein said first mold bonded elastomeric shim layer (30) has a predetermined elastomeric shim layer radial dimension r greater than a predetermined exterior elastomer region radial dimension d with d in the range from .01r to .5r.

19. A method as claimed in claim 14 wherein said interior elastomer region (36) is centered about a bearing center axis (48), with said interior elastomer region (36) extending outward from said bearing center axis (48) with a predetermined interior elastomer region dimension.

20. A method as claimed in claim 14 wherein said at least one elastomeric shim layer (30) with said interior elastomer region (36) interior cured elastomer composition (38) and said exterior elastomer region (40) exterior cured elastomer composition (42) are disposed at a predetermine degradation position (50) within said bearing stack (26).

21. A method as claimed in claim 20 wherein said at least one elastomeric shim layer (30) at said predetermine degradation position (50) within said bearing stack (26) is visible by an observing inspector when installed in a bearing location (54) for bearing a compressive load between said first member (22) and said second member (24) in a first direction (56) and said repeated relative motion comprises an alternating shear load in a first and second shearing direction (58) with said compressive load first direction (56) nonparallel to said first and second shearing direction (58).

22. A method as claimed in claim 20 wherein said at least one elastomeric shim layer (30) with said interior elastomer region (36) interior cured elastomer composition (38) and said exterior elastomer region (40) exterior cured elastomer composition (42) are disposed at a predetermine degradation position (50) within said bearing stack (26) and include a third elastomer region cured elastomer composition (38') having a third optical characteristic different from said interior elastomer region (36) interior cured elastomer composition (38) and said exterior elastomer region (40) exterior cured elastomer composition (42).

23. A method as claimed in claim 14 wherein said at least one elastomeric shim layer (30) within said bearing stack (26) is visible by an observing inspector when installed in a bearing location (54) for bearing a compressive load between said first member (22) and said second member (24) in a first direction (56) and said repeated relative motion comprises an alternating shear load in a first and second shearing direction (58) with said compressive load first direction (56) nonparallel to said first and second shearing direction (58).

24. A method as claimed in claim 16 wherein said at least one elastomeric shim layer (30) has an elastomer layer thickness t and an exterior surface bulge area BA, with said elastomeric shim layer (30) having a bonded elastomer interface load area LA, with said elastomeric shim layer (30) having a shape factor SF with .1<SF<60.

25. A method as claimed in claim 14 wherein said at least one elastomeric shim layer (30) with said interior elastomer region (36) interior cured elastomer composition (38) and said exterior elastomer region (40) exterior cured elastomer composition (42) are disposed at a predetermine degradation position (50) within said bearing stack (26) and said exterior elastomer region (40) extends inward towards said interior elastomer region (36) with a predetermined exterior elastomer region radial dimension.

26. A method as claimed in claim 14 wherein the step of providing said at least first interior optical characteristic ingredient includes providing said interior cured elastomer composition (38) with a carbon black substitute, including silica, and a nonblack colorant, and providing said exterior cured elastomer composition (42) with said second exterior optical characteristic ingredient comprising carbon black.

## Patentansprüche

1. Lager (20) zur Erzeugung einer eingeschränkten Relativbewegung zwischen einem ersten Körper (22) und einem zweiten Körper (24), umfassend einen elastomeren, geformen, gebundenen Lagerstapel (26), der wenigstens eine erste nicht elastomere Körperschicht (28) und wenigstens eine zweite nicht elastomere Körperschicht (28) aufweist sowie wenigstens eine erste geformte, gebundene, elastomere Beilagenschicht (30), die eine äußere Oberfläche (32) und eine innere Mitte (34) aufweist, welche von der äußeren Oberfläche (32) entfernt ist, wobei wenigstens die erste geformte, gebundene, elastomere Beilagenschicht (30) zwischen der genannten wenigstens einen ersten nicht elastomeren Körperschicht (28) und wenigstens einer zweiten nicht elastomeren Körperschicht (28) angeordnet ist, wobei des weiteren die elastomere Beilagenschicht (30) einen eingeschlossenen inneren elastomeren Bereich (36) aufweist, der von der äußeren Oberfläche (32) entfernt ist, dieser innere elastomere Bereich (36) eine innere, gehärtete, elastomere Zusammensetzung hat, die mit wenigstens einem ersten inneren, optischen charakteristischen Bestandteil versehen ist, **dadurch gekennzeichnet, daß** die elastomere Beilagenschicht (30) einen äußeren elastomeren Bereich (40) aufweist, der den inneren elastomeren Bereich (36) umfaßt und nahe der äußeren Oberfläche (32) liegt, wobei dieser äußere elastomere Bereich (40) folgendes aufweist: eine äußere gehärtete, elastomere Zusammensetzung (42) mit wenigstens einem zweiten äußeren optischen, kennzeichnenden Bestandteil, wobei dieser wenigstens zweite äußere optische, kennzeichnende Bestandteil anders ist als der erste innere optische kennzeichnende Bestandteil der inneren gehärteten elastomeren Zusammensetzung (38) und ein elastomerer Hohlraumriß (44) von der äußeren Oberfläche (32) innen in Richtung auf den genannten inneren elastomeren Bereich (36) fortschreitet, des weiteren **dadurch gekennzeichnet, daß** das Lager so ausgebildet ist, daß eine wiederholte Relativbewegung zwischen dem ersten Körper (22) und dem zweiten Körper (24) mehrere innere ausgehärtete, elastomere Zusammensetzungsbrösel (46) erzeugt, die von dem elastomeren Hohlraumriß (44) in Richtung auf den inneren elastomeren Bereich ausgetrieben werden, wobei die inneren ausgehärteten, elastomeren Zusammensetzungsbrösel (46) optisch von der äußeren ausgehärteten, elastomeren Zusammensetzung (42) unterscheidbar sind und der innere elastomere Bereich (36) optisch kennzeichnender Bestandteilunterschied eine sichtbare Rißtiefenbestimmung ermöglicht.

2. Lager (20) nach Anspruch 1, **gekennzeichnet durch** mehrere geformte, gebundene elastomere Beilagenschichten (30), wobei der innere elastomere Bereich (36) und alle elastomeren Beilagenschichten (30) äußerer elastomerer Bereiche (40) von den genannten inneren elastomeren Bereichen (36) optisch unterscheidbar sind.

3. Lager (20) nach einem der vorhergehenden Ansprüche, **dadurch gekennzeichnet, daß** der erste innere optische kennzeichnende Bestandteil aus einem Pigment oder Farbstoff besteht, und daß das Pigment oder der Farbstoff unlöslich im Inneren der gehärteten Elastomer-Zusammensetzung (38) enthalten ist.

4. Lager (20) nach einem der vorhergehenden Ansprüche, **dadurch gekennzeichnet, daß** das Pigment oder der Farbstoff wasserlöslich und fluoreszierend ist.

5. Lager (20) nach einem der vorhergehenden Ansprüche, **dadurch gekennzeichnet, daß** der innere elastomere Bereich (40) sich im Inneren gegen den inneren elastomeren Bereich (36) erstreckt, und zwar in einem vorbestimmten äußeren elastomeren Bereich (40) radialer Form.

6. Lager (20) nach einem der vorhergehenden Ansprüche, **dadurch gekennzeichnet, daß** die erste geformte, gebundene, elastomere Beilagenschicht (30) eine vorbestimmte elastomere Beilagenschicht radialer Abmessung r hat, die größer ist als ein vorbestimmter äußerer elastomerer Bereich radialer Abmessung d, wobei d im Bereich von 0,1 r bis 5 r liegt.

7. Lager (20) nach einem der vorhergehenden Ansprüche, **dadurch gekennzeichnet, daß** der innere elastomere Bereich (36) um eine zentrale Lagerachse (48) zentriert ist, wobei sich der innere elastomere Bereich (36) außerhalb der zentralen Lagerachse (48) erstreckt bei einem inneren elastomeren Bereich (36) vorbestimmter Abmessung.

8. Lager (20) nach einem der vorhergehenden Ansprüche 1 bis 7, **dadurch gekennzeichnet, daß** wenigstens eine elastomere Beilagenschicht (30) mit dem inneren elastomeren Bereich (36), der inneren gehärteten elastomeren Zusammensetzung (42) bei einer vorbestimmten Abbaulage (50) in dem Lagerstapel (26) angeordnet ist.

9. Lager (20) nach Anspruch 8, **dadurch gekennzeichnet, daß** wenigstens eine elastomere Beilagenschicht (30) in einer vorbestimmten Abbaulage (50) in dem Lagerstapel (26) durch einen betrachtenden Beobachter sichtbar ist, wenn sie an einem Lagerort (54) eingebaut ist, um eine kompressive Last zwischen dem ersten Körper (22) und dem zweiten Körper (24) in einer ersten Richtung (56) zu tragen, so daß die wiederholte Relativbewegung eine wechselnde Scherbelastung in einer ersten und zweiten Scherrichtung (58) verursacht, wobei die Druckbelastung der ersten Richtung (56) nicht parallel zu der ersten und zweiten Scherrichtung (58) ist.

10. Lager (20) nach einem der vorhergehenden Ansprüche, **dadurch gekennzeichnet, daß** die wenigstens eine elastomere Beilagenschicht (30) mit dem inneren elastomeren Bereich (36), der inneren gehärteten elastomeren Zusammensetzung (38) und dem äußeren elastomeren Bereich (40) sowie der äußeren gehärteten elastomeren Zusammensetzung (42) in einer vorbestimmten Abbaulage (50) innerhalb des Lagerstapels (26) angeordnet ist und einen dritten elastomeren Bereich gehärteter elastomerer Zusammensetzung (38') aufweist, der eine dritte optische kennzeichnende Eigenschaft hat, welche sich von dem inneren elastomeren Bereich (36) mit innerer gehärteter elastomerer Zusammensetzung (38) und dem äußeren elastomeren Bereich (40) mit äußerer gehärteter elastomerer Zusammensetzung (42) unterscheidet.

11. Lager (20) nach einem der vorhergehenden Ansprüche, **dadurch gekennzeichnet, daß** wenigstens eine elastomere Beilagenschicht (30) eine elastomere Schichtlagendicke t und eine äußere Oberflächen-Ansatzfläche BA aufweist und die genannte elastomere Beilagenschicht (30) mit einer gebundenen elastomeren Zwischenbelastungsfläche LA versehen ist, wobei die genannte elastomere Beilagenschicht (30) einen Formfaktor SF zwichen 1 und 60 hat.

12. Lager (20) nach einem der vorhergehenden Ansprüche, **dadurch gekennzeichnet, daß** die wenigstens eine elastomere Beilagenschicht (30) mit dem inneren elastomeren Bereich (36), der äußeren gehärteten elastomeren Zusammensetzung (38) und dem äußeren elastomeren Bereich (40) sowie der äußeren gehärteten elastomeren Zusammensetzung (42) in einer vorbestimmten Abbaulage (50) innerhalb des Lagerstapels (26) angeordnet sind, und daß der äußere elastomere Bereich (40) sich in Richtung auf den inneren elastomeren Bereich (36) erstreckt, wobei ein vorbestimmter äußerer elastomerer Bereich radialer Abmessung vorhanden ist.

13. Lager (20) nach einem der vorhergehenden Ansprüche, **dadurch gekennzeichnet, daß** der wenigstens erste innere optische kennzeichnende Bestandteil ein Rußersatz und ein gelbes nicht farbiges Farbstoffpigment ist, und daß der zweite äußere optische kennzeichnende Bestandteil aus Ruß besteht.

14. Verfahren zur Herstellung eines Lagers (20) mit einer eingeschränkten Relativbewegung zwischen einem ersten Körper (22) und einem zweiten Körper (24) mit folgenden Schritten: Schaffen wenigstens einer ersten nicht elastomeren Körperoberfläche (28') und wenigstens einer zweiten nicht elastomeren Körperoberfläche (28"), und Schaffen wenigstens einer ersten elastomeren Beilagenschicht (30) zwischen der ersten nicht elastomeren Körperoberfläche (28') und der wenigstens zweiten nicht elastomeren Körperoberfläche (28") in einer Form (60), **dadurch gekennzeichnet, daß** das Verfahren folgende Schritte aufweist: Verbinden der ersten elastomeren Beilagenschicht (30) mit der ersten nicht elastomeren Körperoberfläche (28') und der zweiten nicht elastomeren Körperoberfläche (28") in der Form (60), um dadurch einen elastomeren, geformten, gebundenen Lagerstapel (26) zu schaffen, wobei die erste geformte, gebundene, elastomere Beilagenschicht (30) eine äußere Oberfläche (32) und eine innere Mitte (34) aufweist, die von der genannten äußeren Oberfläche (32) entfernt ist, und wobei die elastomere Beilagenschicht (32) folgendes umfaßt: einen umschlossenen, inneren, gebundenen, elastomeren Bereich (36), der von der äußeren Oberfläche (32) entfernt ist, und wobei der innere elastomere Bereich (36) mit einer inneren, gehärteten, elastomeren Zusammensetzung (38) versehen ist, die wenigstens einen ersten inneren optischen, charakteristischen Bestandteil aufweist, und die elastomere Beilagenschicht (30) einen äußeren, gebundenen, elastomeren Bereich (40) aufweist, der den inneren, gebundenen, elastomeren Bereich (36) umfaßt, wobei des weiteren der äußere elastomere Bereich (40) der äußeren Oberfläche (32) benachbart ist, und dieser äußere elastomere Bereich (40) folgendes aufweist: eine äußere, gehärtete, elastomere Zusammensetzung (42), die wenigstens einen zweiten, äußeren optischen, charakteristischen Bestandteil hat und dieser wenigstens zweite äußere optische charakteristische Bestandteil sich von der inneren gehärteten elastomeren Zusammensetzung (38) und dem ersten inneren optischen charakteristischen Bestandteil unterscheidet, wobei des weiteren ein elastomerer Hohlraumriß (44) vorhanden ist, der von der äußeren Oberfläche (32) nach innen in Richtung auf den inneren elastomeren Bereich (36) fortschreitet, und eine wiederholte Relativbewegung zwischen dem ersten Körper (22) und dem zweiten Körper (24) mehrere innere gehärtete elastomere Zusammensetzungsbrösel (46) erzeugt, die von dem genannten elastomeren Hohlraumriß (44) in Richtung auf den äußeren elastomeren Bereich ausgestoßen werden, und wobei schließlich die inneren, gehärteten, elastomeren Zusammensetzungsbrösel (46) von der äußeren gehärteten, elastomeren Zusammensetzung (42) optisch unterscheidbar sind, und der genannte innere elastomere Bereich (36) mit dem optischen, charakteristischen Unterscheidungsbestandteil eine sichtbare Rißtiefenbestimmung ermöglicht.

15. Verfahren nach Anspruch 14, **dadurch gekennzeichnet, daß** mehrere elastomere Beilagenschichten (30) an dem inneren elastomeren Bereich (36) geschaffen werden, daß diese mehreren elastomeren Beilagenschichten (30) des inneren elastomeren Bereiches (36) zwischen mehreren nicht elastomeren Körperoberflächen (28', 28") lamellenartig angeordnet sind, und daß diese mehreren elastomeren Beilagenschichten (30) außerhalb elastomerer Bereiche (40) von den inneren elastomeren Bereichen (36) optisch unterscheidbar sind.

16. Verfahren nach Anspruch 14 oder 15, **dadurch gekennzeichnet, daß** der erzeugte erste innere optische charakteristische Bestandteil ein Pigment oder einen Farbstoff aufweist, und daß dieses Pigment und der Farbstoff, die fluoreszierend, wasserlöslich sind, in der inneren, gehärteten, elastomeren Zusammensetzung (38) unlöslich sind.

17. Verfahren nach Anspruch 14, **dadurch gekennzeichnet, daß** der äußere elastomere Bereich (40) sich in Richtung auf den inneren elastomeren Bereich (36) erstreckt, bei einem vorbestimmten äußeren elastomeren Bereich radialer Abmessung.

18. Verfahren nach Anspruch 14, **dadurch gekennzeichnet, daß** die erste geformte, gebundene, elastomere Beilagenschicht 830) eine vorbestimmte elastomere Beilagenschicht radialer Abmessung r ist, die größer ist als ein vorbestimmter äußerer elastomerer Bereich radialer Abmessung d, wobei d im Bereich von 0,1 r bis 0,5 r liegt.

19. Verfahren nach Anspruch 14, **dadurch gekennzeichnet, daß** der innere elastomere Bereich (36) um eine Lagermittelachse (48) zentriert ist, wobei sich der innere elastomere Bereich (36) außerhalb der Lagermittelachse (48) erstreckt, und zwar bei einer vorbestimmten inneren elastomeren Bereichsabmessung.

20. Verfahren nach Anspruch 14, **dadurch gekennzeichnet, daß** die wenigstens eine elastomere Beilagenschicht (30) mit dem genannten inneren elastomeren Bereich (36) und der inneren gehärteten elastomeren Zusammensetzung (38) sowie der äußere elastomere Bereich (40) mit der äußeren gehärteten elastomeren Zusammensetzung (42) in dem Lagerstapel (26) in einer vorbestimmten Abbauposition (50) liegen.

21. Verfahren nach Anspruch 20, **dadurch gekennzeichnet, daß** die genannte wenigstens eine elastomere Beilagenschicht (30) in der vorbestimmten Abbauposition (50) innerhalb des Lagerstapels (26) durch einen betrachtenden Beobachter sichtbar ist, wenn sie an einem Lagerort (54) installiert ist, um zwischen dem ersten Körper (22) und dem zweiten Körper (24) in einer ersten Richtung (56) eine Drucklast aufzunehmen, und daß die wiederholte Relativbewegung eine wechselnde Scherbelastung in einer ersten und einer zweiten Scherrichtung (58) bewirkt, wobei die genannte Druckkraft in der ersten Richtung (56) wirkt, die zu der ersten und zweiten Scherrichtung (58) nicht parallel ist.

22. Verfahren nach Anspruch 20, **dadurch gekennzeichnet, daß** wenigstens eine elastomere Beilagenschicht (30) mit dem inneren elastomeren Bereich (36), der inneren gehärteten elastomeren Zusammensetzung (38) und dem genannten äußeren elastomeren Bereich (30) mit der äußeren gehärteten elastomeren Zusammensetzung (42) in einer vorbestimmten Abbaulage (50) innerhalb des Lagerstapels (26) angeordnet ist und einen dritten elastomeren Bereich mit gehärteter elastomerer Zusammensetzung (38') aufweist, wobei ein drittes optisches Kennzeichen vorhanden ist, das sich von dem inneren elastomeren Bereich (36) unterscheidet, sowie der inneren gehärteten elastomeren Zusammensetzung (38) und dem äußeren elastomeren Bereich (40) sowie der äußeren gehärteten elastomeren Zusammensetzung (42).

23. Verfahren nach Anspruch 14, **dadurch gekennzeichnet, daß** wenigstens eine elastomere Beilagenschicht (30) in dem Lagerstapel (26) durch einen betrachtenden Beobachter sichtbar ist, wenn sie in einem Lagerort (54) installiert ist, um eine Druckkraft zwischen dem ersten Körper (22) und dem zweiten Körper (24) in einer ersten Richtung (56) aufzunehmen, und daß die wiederholte Relativbewegung aus einer wechselnden Scherbelastung in einer ersten und einer zweiten Scherrichtung (58) zusammen mit der Druckbelastung in der ersten Richtung (56) besteht, die zu der ersten und zweiten Scherrichtung (58) nicht parallel ist.

24. Verfahren nach Anspruch 16, **dadurch gekennzeichnet, daß** wenigstens eine elastomere Beilagenschicht (30) eine elastomere Schichtdicke (1) und einen äußeren Oberflächenansatzbereich BA aufweist, wobei die elastomere Beilagenschicht (30) einen verbundenen elastomeren Grenzflächenbelastungsbereich LA aufweist und die elastomere Beilagenschicht (30) einen Formfaktor SF von 1 < SF < 60 hat.

25. Verfahren nach Anspruch 14, **dadurch gekennzeichnet, daß** wenigstens eine elastomere Beilagenschicht (30) mit dem inneren elastomeren Bereich (36) und der inneren gehärteten elastomeren Zusammensetzung (38) sowie der äußere elastomere Bereich (40) mit der äußeren gehärteten elastomeren Zusammensetzung (42) an einem vorbestimmten Abbauort (50) angeordnet ist, und daß der äußere elastomere Bereich (40) sich innen gegen den inneren elastomeren Bereich (26) mit einer vorbestimmten äußeren elastomeren radialen Bereichsabmessung erstreckt.

26. Verfahren nach Anspruch 14, **dadurch gekennzeichnet, daß** zu dem Schritt der Schaffung des genannten wenigstens ersten inneren optischen kennzeichnenden Bestandteils gehört, daß die genannte innere gehärtete elastomere Zusammensetzung (38) mit einem Rußersatz vorgesehen wird, der Siliziumdioxid und einen nicht schwarzen Farbstoff enthält, und daß die äußere gehärtete elastomere Zusammensetzung (42) mit einem zweiten äußeren optischen kennzeichnenden Bestandteil versehen wird, der aus Ruß besteht.

## Revendications

1. Palier (20) pour fournir un mouvement relatif limité entre un premier élément (22) et un second élément (24), ledit palier (20) comprenant :
un empilement palier élastomère lié par moulage (26), ledit empilement palier élastomère lié par moulage (26) comprenant au moins une première couche d'élément non-élastomère (28) et au moins une seconde couche d'élément non-élastomère (28), au moins une première couche de cale élastomère liée par moulage (30), ladite au moins une première couche de cale élastomère liée par moulage (30) ayant une surface extérieure (32) et un centre intérieur (34) distal vis-à-vis de ladite surface extérieure (32), ladite au moins une première couche de cale élastomère liée par moulage (30) étant positionnée entre ladite au moins une première couche d'élément non-élastomère (28) et ladite au moins une seconde couche d'élément non-élastomère (28),
ladite couche de cale élastomère (30) comprenant une région élastomère intérieure enfermée (36) distale vis-à-vis de ladite surface extérieure (32), ladite région élastomère intérieure (36) comprenant une composition élastomère durcie intérieure (38) ayant au moins un ingrédient intérieur à première caractéristique optique,
**caractérisé par le fait que** ladite couche de cale élastomère (30) comprend une région élastomère extérieure (40) entourant ladite région élastomère intérieure (36), ladite région élastomère extérieure (40) étant proximale à ladite surface extérieure (32), ladite région élastomère extérieure (40) comprenant une composition élastomère durcie extérieure (42) ayant au moins un ingrédient extérieur à deuxième caractéristique optique, ledit au moins un ingrédient extérieur à deuxième caractéristique optique étant différent de l'ingrédient intérieur à première caractéristique optique de ladite composition élastomère durcie intérieure (38), une fissure de vide élastomère (44) se propageant à partir de ladite surface extérieure (32) vers l'intérieur en direction de ladite région élastomère intérieure (36),
le palier étant configuré de telle sorte qu'un mouvement relatif répété entre ledit premier élément (22) et ledit second élément (24) génère une pluralité de granules de composition élastomère durcie intérieure (46) à expulser de ladite fissure de vide élastomère (44) vers la région élastomère extérieure, lesdits granules de composition élastomère durcie intérieure (46) étant distinguables optiquement de ladite composition élastomère durcie extérieure (42), la différence d'ingrédient à caractéristique optique de ladite région élastomère intérieure (36) fournissant une détermination visuelle de la profondeur de fissure.

2. Palier (20) selon la revendication 1 avec une pluralité desdites couches de cale élastomères liées par moulage (30) avec ladite région élastomère intérieure (36) et toutes les régions élastomères extérieures (40) desdites couches de cale élastomères (30) sont distinguables optiquement desdites régions élastomères intérieures (36).

3. Palier (20) selon l'une quelconque des revendications précédentes, dans lequel ledit ingrédient intérieur à première caractéristique optique comprend un pigment ou un colorant, ledit pigment ou colorant étant insoluble dans ladite composition élastomère durcie intérieure (38).

4. Palier (20) selon l'une quelconque des revendications précédentes, dans lequel ledit pigment ou colorant est soluble dans l'eau et fluorescent.

5. Palier (20) selon l'une quelconque des revendications précédentes, dans lequel ladite région élastomère extérieure (40) s'étend vers l'intérieur en direction de ladite région élastomère intérieure (36) avec une dimension radiale prédéterminée de la région élastomère extérieure (40).

6. Palier (20) selon l'une quelconque des revendications précédentes, dans lequel ladite première couche de cale élastomère liée par moulage (30) a une dimension radiale prédéterminée r de couche de cale élastomère supérieure à une dimension radiale prédéterminée d de région élastomère extérieure, avec d dans la plage allant de 0,01r à 0,5r.

7. Palier (20) selon l'une quelconque des revendications précédentes, dans lequel ladite région élastomère intérieure (36) est centrée autour d'un axe central de palier (48), avec ladite région élastomère intérieure (36) s'étendant vers l'extérieur à partir dudit axe central de palier (48) avec une dimension prédéterminée de la région élastomère intérieure (36).

8. Palier (20) selon l'une quelconque des revendications précédentes jusqu'à la revendication 7, dans lequel ladite au moins une couche de cale élastomère (30) avec la composition élastomère durcie intérieure (38) de ladite région élastomère intérieure (36) et la composition élastomère durcie extérieure (42) de ladite région élastomère extérieure (40) sont disposées dans une position de dégradation prédéterminée (50) à l'intérieur dudit empilement palier (26).

9. Palier (20) selon la revendication 8, dans lequel ladite au moins une couche de cale élastomère (30) dans ladite position de dégradation prédéterminée (50) à l'intérieur dudit empilement palier (26) est visible par un inspecteur l'observant lorsqu'il est installé dans un emplacement de palier (54) pour supporter une charge de compression entre ledit premier élément (22) et ledit second élément (24) dans une première direction (56), et ledit mouvement relatif répété comprend une charge de cisaillement alternée dans des première et seconde directions de cisaillement (58) avec ladite première direction de charge de compression (56) non parallèle auxdites première et seconde directions de cisaillement (58).

10. Palier (20) selon l'une quelconque des revendications précédentes, dans lequel ladite au moins une couche de cale élastomère (30) avec la composition élastomère durcie intérieure (38) de ladite région élastomère intérieure (36) et la composition élastomère durcie extérieure (42) de ladite région élastomère extérieure (40) sont disposées dans une position de dégradation prédéterminée (50) à l'intérieur dudit empilement palier (26) et comprennent une composition élastomère durcie de troisième région élastomère (38') ayant une troisième caractéristique optique différente de la composition élastomère durcie intérieure (38) de ladite région élastomère intérieure (36) et de la composition élastomère durcie extérieure (42) de ladite région élastomère extérieure (40).

11. Palier (20) selon l'une quelconque des revendications précédentes, dans lequel ladite au moins une couche de cale élastomère (30) a une épaisseur de couche élastomère t et une aire de renflement de surface extérieure BA, avec ladite couche de cale élastomère (30) ayant une aire de charge d'interface élastomère liée LA, avec ladite couche de cale élastomère (30) ayant un facteur de forme SF avec 0,1<SF<60.

12. Palier (20) selon l'une quelconque des revendications précédentes, dans lequel ladite au moins une couche de cale élastomère (30) avec la composition élastomère durcie intérieure (38) de ladite région élastomère intérieure (36) et la composition élastomère durcie extérieure (42) de ladite région élastomère extérieure (40) sont disposées dans une position de dégradation prédéterminée (50) à l'intérieur dudit empilement palier (26) et ladite région élastomère extérieure (40) s'étend vers l'intérieur en direction de ladite région élastomère intérieure (36) avec une dimension radiale prédéterminée de région élastomère extérieure.

13. Palier (20) selon l'une quelconque des revendications précédentes, dans lequel ledit au moins un ingrédient intérieur à première caractéristique optique comprend un substitut du noir de carbone et un colorant non-noir à pigment jaune, et ledit ingrédient extérieur à deuxième caractéristique optique est composé de noir de carbone.

14. Procédé de fabrication d'un palier (20) pour fournir un mouvement relatif limité entre un premier élément (22) et un second élément (24), ledit procédé comprenant :
fournir au moins une première surface d'élément non-élastomère (28') et au moins une seconde surface d'élément non-élastomère (28"),
fournir au moins une première couche de cale élastomère (30) entre ladite première surface d'élément non-élastomère (28') et ladite au moins une seconde surface d'élément non-élastomère (28") dans un moule (60), et
**caractérisé par le fait que** ledit procédé comprend lier ladite première couche de cale élastomère (30) à ladite première surface d'élément non-élastomère (28') et à ladite seconde surface d'élément non-élastomère (28") dans ledit moule (60) pour fournir un empilement palier élastomère lié par moulage (26), avec la première couche de cale élastomère liée par moulage (30) ayant une surface extérieure (32) et un centre intérieur (34) distal vis-à-vis de ladite surface extérieure (32), ladite couche de cale élastomère (32) comprenant une région élastomère liée intérieure enfermée (36) distale vis-à-vis de ladite surface extérieure (32), ladite région élastomère intérieure (36) comprenant une composition élastomère durcie intérieure (38) ayant au moins un ingrédient intérieur à première caractéristique optique, et ladite couche de cale élastomère (30) comprenant une région élastomère liée extérieure (40) entourant ladite région élastomère liée intérieure (36), ladite région élastomère extérieure (40) étant proximale à ladite surface extérieure (32), ladite région élastomère extérieure (40) comprenant une composition élastomère durcie extérieure (42) ayant au moins un ingrédient extérieur à deuxième caractéristique optique, ledit au moins un ingrédient extérieur à deuxième caractéristique optique étant différent de l'ingrédient intérieur à première caractéristique optique de ladite composition élastomère durcie intérieure (38), une fissure de vide élastomère (44) se propageant à partir de ladite surface extérieure (32) vers l'intérieur en direction de ladite région élastomère intérieure (36) et un mouvement relatif répété entre ledit premier élément (22) et ledit second élément (24) générant une pluralité de granules de composition élastomère durcie intérieure (46) à expulser de ladite fissure de vide élastomère (44) vers la région élastomère extérieure, lesdits granules de composition élastomère durcie intérieure (46) étant distinguables optiquement de ladite composition élastomère durcie extérieure (42), la différence d'ingrédient à caractéristique optique de ladite région élastomère intérieure (36) fournissant une détermination visuelle de la profondeur de fissure.

15. Procédé selon la revendication 14, comprenant fournir une pluralité de couches de cale élastomères (30) avec ladite région élastomère intérieure (36), ladite pluralité de couches de cale élastomères (30) avec ladite région élastomère intérieure (36) étant stratifiées entre une pluralité de surfaces d'élément non-élastomère (28', 28"), avec les régions élastomères extérieures (40) de ladite pluralité de couches de cale élastomères (30) qui sont distinguables optiquement desdites régions élastomères intérieures (36).

16. Procédé selon la revendication 14 ou 15, comprenant en outre fournir ledit ingrédient intérieur à première caractéristique optique comprend un pigment ou un colorant, ledit pigment ou colorant étant fluorescent, soluble dans l'eau, et insoluble dans ladite composition élastomère durcie intérieure (38).

17. Procédé selon la revendication 14, dans lequel ladite région élastomère extérieure (40) s'étend vers l'intérieur en direction de ladite région élastomère intérieure (36) avec une dimension radiale prédéterminée de région élastomère extérieure.

18. Procédé selon la revendication 14, dans lequel ladite première couche de cale élastomère liée par moulage (30) a une dimension radiale prédéterminée r de couche de cale élastomère supérieure à une dimension radiale prédéterminée d de région élastomère extérieure, avec d dans la plage allant de 0,01r à 0,5r.

19. Procédé selon la revendication 14, dans lequel ladite région élastomère intérieure (36) est centrée autour d'un axe central de palier (48), avec ladite région élastomère intérieure (36) s'étendant vers l'extérieur à partir dudit axe central de palier (48) avec une dimension prédéterminée de région élastomère intérieure.

20. Procédé selon la revendication 14, dans lequel ladite au moins une couche de cale élastomère (30) avec la composition élastomère durcie intérieure (38) de ladite région élastomère intérieure (36) et la composition élastomère durcie extérieure (42) de ladite région élastomère extérieure (40) sont disposées dans une position de dégradation prédéterminée (50) à l'intérieur dudit empilement palier (26).

21. Procédé selon la revendication 20, dans lequel ladite au moins une couche de cale élastomère (30) dans ladite position de dégradation prédéterminée (50) à l'intérieur dudit empilement palier (26) est visible par un inspecteur l'observant lorsqu'il est installé dans un emplacement de palier (54) pour supporter une charge de compression entre ledit premier élément (22) et ledit second élément (24) dans une première direction (56) et ledit mouvement relatif répété comprend une charge de cisaillement alternée dans des première et seconde directions de cisaillement (58) avec ladite première direction de charge de compression (56) non parallèle auxdites première et seconde directions de cisaillement (58).

22. Procédé selon la revendication 20, dans lequel ladite au moins une couche de cale élastomère (30) avec la composition élastomère durcie intérieure (38) de ladite région élastomère intérieure (36) et la composition élastomère durcie extérieure (42) de ladite région élastomère extérieure (40) sont disposées dans une position de dégradation prédéterminée (50) à l'intérieur dudit empilement palier (26) et comprennent une composition élastomère durcie de troisième région élastomère (38') ayant une troisième caractéristique optique différente de la composition élastomère durcie intérieure (38) de ladite région élastomère intérieure (36) et de la composition élastomère durcie extérieure (42) de ladite région élastomère extérieure (40).

23. Procédé selon la revendication 14, dans lequel ladite au moins une couche de cale élastomère (30) à l'intérieur dudit empilement palier (26) est visible par un inspecteur l'observant lorsqu'il est installé dans un emplacement de palier (54) pour supporter une charge de compression entre ledit premier élément (22) et ledit second élément (24) dans une première direction (56) et ledit mouvement relatif répété comprend une charge de cisaillement alternée dans des première et seconde directions de cisaillement (58) avec ladite première direction de charge de compression (56) non parallèle auxdites première et seconde directions de cisaillement (58).

24. Procédé selon la revendication 16, dans lequel ladite au moins une couche de cale élastomère (30) a une épaisseur de couche élastomère t et une aire de renflement de surface extérieure BA, avec ladite couche de cale élastomère (30) ayant une aire de charge d'interface élastomère liée LA, avec ladite couche de cale élastomère (30) ayant un facteur de forme SF avec 0,1<SF<60.

25. Procédé selon la revendication 14, dans lequel ladite au moins une couche de cale élastomère (30) avec la composition élastomère durcie intérieure (38) de ladite région élastomère intérieure (36) et la composition élastomère durcie extérieure (42) de ladite région élastomère extérieure (40) sont disposées dans une position de dégradation prédéterminée (50) à l'intérieur dudit empilement palier (26) et ladite région élastomère extérieure (40) s'étend vers l'intérieur en direction de ladite région élastomère intérieure (36) avec une dimension radiale prédéterminée de région élastomère extérieure.

26. Procédé selon la revendication 14, dans lequel l'étape de fourniture dudit au moins un ingrédient intérieur à première caractéristique optique comprend fournir ladite composition élastomère durcie intérieure (38) avec un substitut du noir de carbone, comprenant la silice, et un colorant non-noir, et fournir ladite composition élastomère durcie extérieure (42) avec ledit ingrédient extérieur à deuxième caractéristique optique comprenant du noir de carbone.
